# EUROPEAN PATENT APPLICATION

(11) **EP 4 583 490 A1**
(43) Date of publication of application: **09.07.2025**
(21) Application number: 23870545.3
(22) Date of filing: 20.09.2023
(51) Int. Cl.: H04L 67/10

(54) **COMMUNICATION METHOD AND APPARATUS**

(30) Priority: 30.09.2022 CN 202211215653
(71) Applicant: Huawei Technologies Co., Ltd., Shenzhen, Guangdong 518129 (CN)
(72) Inventor: ZHANG, Jian, Shenzhen, Guangdong 518129 (CN); YANG, Yanmei, Shenzhen, Guangdong 518129 (CN); GE, Cuili, Shenzhen, Guangdong 518129 (CN)
(74) Representative: Gill Jennings & Every LLP
(86) International application number: PCT/CN2023/120184
(87) International publication number: WO 2024/067313

(57) **Abstract**

Embodiments of this application disclose a communication method and apparatus. The method includes: A CCF entity receives a first request sent by an API invoking entity, where the first request includes a first API requested by the API invoking entity; the CCF entity queries, from pre-stored first API information, whether the first API is available, where the first API information includes availability of a plurality of APIs, and the plurality of APIs include the first API; and if the first API is unavailable, the CCF entity determines to request to instantiate an API provider entity corresponding to the first API. According to embodiments of this application, a corresponding API provider entity is instantiated based on a requirement, thereby avoiding a waste of resources of the API provider entity and improving resource utilization.

## Description

This application claims priority to Chinese Patent Application No. 202211215653.2, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Mobile edge computing (mobile edge computing, MEC) is also referred to as multi-access edge computing (multi-access edge computing), and may nearby provide, by using a radio access network, an IT service and a cloud computing function that are needed by a telecommunication user, to create a telecommunication service environment with high performance, a low latency, and a high bandwidth, accelerate fast downloading of content, services, and applications in the network, and enable a consumer to experience an uninterrupted high-quality network.

In a deployment architecture of a current application server, a conventional single application server is divided into a plurality of application servers, to provide application services with high security and large capacity. The current application server is in virtualization or cloud-based deployment. An edge application server (edge application server, EAS) may be deployed as an instance of a virtual server. To effectively use a computing resource of an edge network, the EAS may be dynamically deployed or instantiated as required. However, in an existing technical solution, resources of an application programming interface (application programming interface, API) provider entity (for example, the EAS) cannot be fully used, resulting in a waste of the resources of the API provider entity.

### SUMMARY

Embodiments of this application provide a communication method and apparatus, to instantiate a corresponding API provider entity based on a requirement, avoid a waste of resources of the API provider entity, and improve resource utilization.

According to a first aspect, an embodiment of this application provides a communication method. The method includes:
A common application programming interface framework core function CCF entity receives a first request sent by an application programming interface API invoking entity, where the first request includes a first API requested by the API invoking entity; the CCF entity queries, from pre-stored first API information, whether the first API is available, where the first API information includes availability of a plurality of APIs, and the plurality of APIs include the first API; and if the first API is unavailable, the CCF entity determines to request to instantiate an API provider entity corresponding to the first API.

After receiving the first API requested by the API invoking entity, the CCF entity determines, based on availability of the first API, whether to request a network management system to instantiate the API provider entity corresponding to the first API. The network management system instantiates the API provider entity corresponding to the first API, so that the API invoking entity obtains interface information of the first API, and invokes the first API via the interface information of the first API to provide a service. In this way, a corresponding API provider entity is instantiated based on a requirement, thereby avoiding a waste of resources of the API provider entity and improving resource utilization.

In a possible design, the CCF entity sends a second request to a network management system, where the second request is used to request to instantiate the API provider entity corresponding to the first API; and the CCF entity receives a first response sent by the network management system, where the first response includes interface information of the first API.

In another possible design, the CCF entity sends a second response to the API invoking entity, where the second response includes the interface information of the first API. Therefore, the API invoking entity invokes the first API via the interface information of the first API to provide a service.

In another possible design, when the API provider entity corresponding to the first API includes a plurality of API provider entities, the CCF entity selects a target API provider entity from the plurality of API provider entities, where the second request includes an identifier of the target API provider entity, and the second request is used to request to instantiate the target API provider entity.

In another possible design, the CCF entity receives second API information sent by the network management system, where the second API information includes an API of an instantiable API provider entity and/or availability of the API of the instantiable API provider entity.

According to a second aspect, an embodiment of this application provides a communication method. The method includes:
A network management system receives a second request sent by a common application programming interface framework core function CCF entity, where the second request is used to request to instantiate an API provider entity corresponding to a first API, and the first API is an API requested by an application programming interface API invoking entity;
the network management system instantiates the API provider entity corresponding to the first API; and
the network management system sends a first response to the CCF entity, where the first response includes interface information of the first API.

After receiving the first API requested by the API invoking entity, the CCF entity determines, based on availability of the first API, whether to request the network management system to instantiate the API provider entity corresponding to the first API. The network management system instantiates the API provider entity corresponding to the first API, so that the API invoking entity obtains the interface information of the first API, and invokes the first API via the interface information of the first API to provide a service. In this way, a corresponding API provider entity is instantiated based on a requirement, thereby avoiding a waste of resources of the API provider entity and improving resource utilization.

In another possible design, the network management system sends second API information to the CCF entity, where the second API information includes an API of an instantiable API provider entity and/or availability of the API of the instantiable API provider entity.

In another possible design, when the API provider entity corresponding to the first API includes a plurality of API provider entities, the network management system selects a target API provider entity from the plurality of API provider entities; and the network management system instantiates the target API provider entity. This avoids a waste of resources caused by instantiating the plurality of API provider entities by the network management entity.

According to a third aspect, an embodiment of this application provides a communication method. The method includes:
An application programming interface API invoking entity sends a first request to a common application programming interface framework core function CCF entity, where the first request includes a first API requested by the API invoking entity; and
the API invoking entity receives a second response sent by the CCF entity, where the second response includes interface information of the first API obtained by instantiating an API provider entity corresponding to the first API.

After receiving the first API requested by the API invoking entity, the CCF entity determines, based on availability of the first API, whether to request a network management system to instantiate the **API** provider entity corresponding to the first API. The network management system instantiates the API provider entity corresponding to the first API, so that the API invoking entity obtains the interface information of the first API, and invokes the first API via the interface information of the first API to provide a service. In this way, a corresponding API provider entity is instantiated based on a requirement, thereby avoiding a waste of resources of the API provider entity and improving resource utilization.

According to a fourth aspect, an embodiment of this application provides a communication method. The method includes:
An application programming interface API invoking entity receives a first response sent by a common application programming interface framework core function CCF entity, where the first response includes an API of an instantiable API provider entity and/or availability of the API of the instantiable API provider entity; the API invoking entity determines, based on the API of the instantiable API provider entity and/or the availability of the API of the instantiable API provider entity, whether a first API requested by the API invoking entity is available; and if the first API is unavailable, the API invoking entity determines to request to instantiate an API provider entity corresponding to the first API.

After receiving the API of the instantiable API provider entity and/or the availability of the API of the instantiable API provider entity, the API invoking entity determines whether to request to instantiate the API provider entity corresponding to the first API. A network management system instantiates the API provider entity corresponding to the first API, so that the API invoking entity obtains interface information of the first API, and invokes the first API via the interface information of the first API to provide a service. In this way, a corresponding API provider entity is instantiated based on a requirement, thereby avoiding a waste of resources of the API provider entity and improving resource utilization.

In a possible design, the API invoking entity sends a first request to the CCF entity, where the first request indicates the available first API obtained by instantiating the API provider entity corresponding to the first API; and the API invoking entity receives a second response sent by the CCF entity, where the second response includes the interface information of the first API.

According to a fifth aspect, an embodiment of this application provides a communication method. The method includes:
A common application programming interface framework core function CCF entity sends a first response to an application programming interface API invoking entity, where the first response includes an API of an instantiable API provider entity and/or availability of the API of the instantiable API provider entity; and the CCF entity receives a first request sent by the API invoking entity, where the first request indicates an available first API obtained by instantiating an API provider entity corresponding to the first API.

After receiving the API of the instantiable API provider entity and/or the availability of the API of the instantiable API provider entity, the API invoking entity determines whether to request to instantiate the API provider entity corresponding to the first API. A network management system instantiates the API provider entity corresponding to the first API, so that the API invoking entity obtains interface information of the first API, and invokes the first API via the interface information of the first API to provide a service. In this way, a corresponding API provider entity is instantiated based on a requirement, thereby avoiding a waste of resources of the API provider entity and improving resource utilization.

In a possible design, the CCF entity sends a second request to a network management system, where the second request is used to request to instantiate the API provider entity corresponding to the first API; and the CCF entity receives a third response from the network management system, where the third response includes interface information of the first API.

In another possible design, when the API provider entity corresponding to the first API includes a plurality of API provider entities, the CCF entity selects a target API provider entity from the plurality of API provider entities, where the second request includes an identifier of the target API provider entity, and the second request is used to request to instantiate the target API provider entity.

In another possible design, the CCF entity sends a second response to the API invoking entity, where the second response includes the interface information of the first API.

In another possible design, the CCF entity receives first API information sent by the network management system, where the first API information includes the API of the instantiable API provider entity and/or the availability of the API of the instantiable API provider entity.

According to a sixth aspect, an embodiment of this application provides a communication method. The method includes:
A network management system receives a second request sent by a common application programming interface framework core function CCF entity, where the second request is used to request to instantiate an API provider entity corresponding to a first API, and the first API is an API requested by an application programming interface API invoking entity; the network management system instantiates the API provider entity corresponding to the first API; and the network management system sends a third response to the CCF entity, where the third response includes interface information of the first API.

After receiving an API of an instantiable API provider entity and/or availability of the API of the instantiable API provider entity, the API invoking entity determines whether to request to instantiate the API provider entity corresponding to the first API. The network management system instantiates the API provider entity corresponding to the first API, so that the API invoking entity obtains the interface information of the first API, and invokes the first API via the interface information of the first API to provide a service. In this way, a corresponding API provider entity is instantiated based on a requirement, thereby avoiding a waste of resources of the API provider entity and improving resource utilization.

In another possible design, the network management system sends first API information to the CCF entity, where the first API information includes an API of an instantiable API provider entity and/or availability of the API of the instantiable API provider entity.

In another possible design, when the API provider entity corresponding to the first API includes a plurality of API provider entities, the network management system selects a target API provider entity from the plurality of API provider entities; and the network management system instantiates the target API provider entity.

According to a seventh aspect, an embodiment of this application provides a communication method. The method includes:
A first common application programming interface framework core function CCF entity receives a first request sent by a second CCF entity, where the first request includes a first API requested by an API invoking entity; the first CCF entity queries, from pre-stored first API information, whether the first API is available, where the first API information includes availability of a plurality of APIs within a control range of the first CCF entity, and the plurality of APIs include the first API; and if the first API is unavailable, the first CCF determines to request to instantiate an API provider entity corresponding to the first API.

The second CCF entity selects a CCF entity based on availability of APIs of API provider entities within control ranges of a plurality of CCF entities. When an API discovery procedure is executed across CCF entities, the first CCF entity determines, based on the availability of the plurality of APIs within the control range of the first CCF entity, whether to request to instantiate the API provider entity corresponding to the first API. A network management system instantiates the API provider entity corresponding to the first API, so that the API invoking entity obtains interface information of the first API, to support a function requirement of a multi-EAS scenario, and fully use a computing resource of a mobile edge network.

In another possible design, the first CCF entity sends a second request to a network management system, where the second request is used to request to instantiate the API provider entity corresponding to the first API; and the first CCF entity receives a first response sent by the network management system, where the first response includes interface information of the first API.

In another possible design, the first CCF entity sends a second response to the second CCF entity, where the second response includes the interface information of the first API.

In another possible design, when the API provider entity corresponding to the first API includes a plurality of API provider entities, the first CCF entity selects a target API provider entity from the plurality of API provider entities, where the second request includes an identifier of the target API provider entity, and the second request is used to request to instantiate the target API provider entity.

In another possible design, the first CCF entity receives second API information sent by the network management system, where the second API information includes an API of an instantiable API provider entity within the control range of the first CCF entity and/or availability of the API of the instantiable API provider entity within the control range of the first CCF entity.

In another possible design, the first CCF entity sends a third request to the second CCF entity, where the third request includes an identifier of the first CCF, and the API of the instantiable API provider entity within the control range of the first CCF entity and/or the availability of the API of the instantiable API provider entity within the control range of the first CCF entity.

According to an eighth aspect, an embodiment of this application provides a communication method. The method includes:
A second common application programming interface framework core function CCF entity receives a fourth request sent by an API invoking entity, where the fourth request includes a first API requested by the API invoking entity;
the second CCF entity queries, from pre-stored third API information, whether the first API is available, where the third API information includes availability of APIs of API provider entities within control ranges of a plurality of CCF entities, and the plurality of CCF entities include a first CCF entity and the second CCF entity; and
if the first API is unavailable, the second CCF entity selects the first CCF entity corresponding to the first API from the plurality of CCF entities.

The second CCF entity selects a CCF entity based on the availability of the APIs of the API provider entities within the control ranges of the plurality of CCF entities. When an API discovery procedure is executed across CCF entities, the first CCF entity determines, based on availability of a plurality of APIs within a control range of the first CCF entity, whether to request to instantiate an API provider entity corresponding to the first API. A network management system instantiates the API provider entity corresponding to the first API, so that the API invoking entity obtains interface information of the first API, to support a function requirement of a multi-EAS scenario, and fully use a computing resource of a mobile edge network.

In another possible design, the second CCF entity sends a first request to the first CCF entity, where the first request includes the first API requested by the API invoking entity; and the second CCF entity receives a second response sent by the first CCF entity, where the second response includes interface information of the first API.

In another possible design, the second CCF entity receives a third request sent by the first CCF entity, where the third request includes an identifier of the first CCF, and an API of an instantiable API provider entity within a control range of the first CCF entity and/or availability of the API of the instantiable API provider entity within the control range of the first CCF entity.

In another possible design, the second CCF entity sends a third response to the API invoking entity, where the third response includes the interface information of the first API.

In another possible design, the second CCF entity receives fourth API information sent by a network management system, where the fourth API information includes an API of an instantiable API provider entity within a control range of the second CCF entity and/or availability of the API of the instantiable API provider entity within the control range of the second CCF entity.

According to a ninth aspect, an embodiment of this application provides a communication method. The method includes:
A network management system receives a second request sent by a first common application programming interface framework core function CCF entity, where the second request is used to request to instantiate an API provider entity corresponding to a first API, and the first API is an API requested by an application programming interface API invoking entity;
the network management system instantiates the API provider entity corresponding to the first API; and
the network management system sends a first response to the first CCF entity, where the first response includes interface information of the first API.

The second CCF entity selects a CCF entity based on availability of APIs of API provider entities within control ranges of a plurality of CCF entities. When an API discovery procedure is executed across CCF entities, the first CCF entity determines, based on availability of a plurality of APIs within a control range of the first CCF entity, whether to request to instantiate the API provider entity corresponding to the first API. The network management system instantiates the API provider entity corresponding to the first API, so that the API invoking entity obtains the interface information of the first API, to support a function requirement of a multi-EAS scenario, and fully use a computing resource of a mobile edge network.

In another possible design, the network management system sends second API information to the first CCF entity, where the second API information includes an API of an instantiable API provider entity within a control range of the first CCF entity and/or availability of the API of the instantiable API provider entity within the control range of the first CCF entity.

In another possible design, the network management system sends fourth API information to the second CCF entity, where the fourth API information includes an API of an instantiable API provider entity within a control range of the second CCF entity and/or availability of the API of the instantiable API provider entity within the control range of the second CCF entity.

In another possible design, when the API provider entity corresponding to the first API includes a plurality of API provider entities, the network management system selects a target API provider entity from the plurality of API provider entities; and the network management system instantiates the target API provider entity.

According to a tenth aspect, an embodiment of this application provides a communication method. The method includes:
An application programming interface API invoking entity sends a fourth request to a second common application programming interface framework core function CCF entity, where the fourth request includes a first API requested by the API invoking entity; and
the API invoking entity receives a third response sent by the second CCF entity, where the third response includes interface information of the first API obtained by instantiating an API provider entity corresponding to the first API, and the interface information of the first API is used by the API invoking entity to invoke the first API to provide a service.

The second CCF entity selects a CCF entity based on availability of APIs of API provider entities within control ranges of a plurality of CCF entities. When an API discovery procedure is executed across CCF entities, the first CCF entity determines, based on availability of a plurality of APIs within a control range of the first CCF entity, whether to request to instantiate the API provider entity corresponding to the first API. A network management system instantiates the API provider entity corresponding to the first API, so that the API invoking entity obtains the interface information of the first API, to support a function requirement of a multi-EAS scenario, and fully use a computing resource of a mobile edge network.

According to an eleventh aspect, an embodiment of this application provides a communication method. The method includes:
A first common application programming interface framework core function CCF entity receives a first request sent by a second CCF entity, where the first request includes a first API requested by an application programming interface API invoking entity; the first CCF entity queries, from pre-stored first API information, whether the first API is available, where the first API information includes availability of a plurality of APIs within a control range of the first CCF entity, and the plurality of APIs include the first API; and if the first API is unavailable, the first CCF determines to request to instantiate an API provider entity corresponding to the first API.

The API invoking entity selects a CCF entity based on availability of APIs of API provider entities within control ranges of a plurality of CCF entities. When an API discovery procedure is executed across CCF entities, the first CCF entity determines, based on availability of a plurality of APIs within the control range of the first CCF entity, whether to request to instantiate the API provider entity corresponding to the first API. A network management system instantiates the API provider entity corresponding to the first API, so that the API invoking entity obtains interface information of the first API, to support a function requirement of a multi-EAS scenario, and fully use a computing resource of a mobile edge network.

In another possible design, the first CCF entity sends a second request to a network management system, where the second request is used to request to instantiate the API provider entity corresponding to the first API; and the first CCF entity receives a first response sent by the network management system, where the first response includes interface information of the first API.

In another possible design, when the API provider entity corresponding to the first API includes a plurality of API provider entities, the first CCF entity selects a target API provider entity from the plurality of API provider entities, where the second request includes an identifier of the target API provider entity, and the second request is used to request to instantiate the target API provider entity.

In another possible design, the first CCF entity sends a second response to the second CCF entity, where the second response includes the interface information of the first API.

In another possible design, the first CCF entity receives second API information sent by the network management system, where the second API information includes an API of an instantiable API provider entity within the control range of the first CCF entity and/or availability of the API of the instantiable API provider entity within the control range of the first CCF entity.

In another possible design, the first CCF entity receives a third request sent by the second CCF entity; and
the first CCF entity sends a third response to the second CCF entity, where the third response includes an identifier of the first CCF, and the API of the instantiable API provider entity within the control range of the first CCF entity and/or the availability of the API of the instantiable API provider entity within the control range of the first CCF entity.

According to a twelfth aspect, an embodiment of this application provides a communication method. The method includes:
An application programming interface API invoking entity receives a fourth response sent by a second common application programming interface framework core function CCF entity, where the fourth response includes availability of APIs of API provider entities within control ranges of a plurality of CCF entities, and the plurality of CCF entities include a first CCF entity and the second CCF entity; the API invoking entity determines, based on the availability of the APIs of the API provider entities within the control ranges of the plurality of CCF entities, whether a first API requested by the API invoking entity is available; and if the first API is unavailable, the API invoking entity selects the first CCF entity corresponding to the first API from the plurality of CCF entities.

The API invoking entity selects a CCF entity based on the availability of the APIs of the API provider entities within the control ranges of the plurality of CCF entities. When an API discovery procedure is executed across CCF entities, the first CCF entity determines, based on availability of a plurality of APIs within a control range of the first CCF entity, whether to request to instantiate an API provider entity corresponding to the first API. A network management system instantiates the API provider entity corresponding to the first API, so that the API invoking entity obtains interface information of the first API, to support a function requirement of a multi-EAS scenario, and fully use a computing resource of a mobile edge network.

In another possible design, the API invoking entity sends a fourth request to the second CCF entity, where the fourth request includes an identifier of the first CCF entity and the first API, and the identifier of the first CCF entity and the first API are used to request to instantiate an API provider entity corresponding to the first API within a control range of the first CCF entity; and the API invoking entity receives a fifth response sent by the second CCF entity, where the fifth response includes interface information of the first API.

According to a thirteenth aspect, an embodiment of this application provides a communication method. The method includes:
A second common application programming interface framework core function CCF entity receives a fourth request sent by an API invoking entity, where the fourth request includes an identifier of a first CCF entity and a first API requested by the application programming interface API invoking entity, and the identifier of the first CCF entity and the first API are used to request to instantiate an API provider entity corresponding to the first API within a control range of the first CCF entity; and the second CCF entity sends a first request to the first CCF entity, where the first request includes the first API requested by the application programming interface API invoking entity.

The API invoking entity selects a CCF entity based on availability of APIs of API provider entities within control ranges of a plurality of CCF entities. When an API discovery procedure is executed across CCF entities, the first CCF entity determines, based on availability of a plurality of APIs within the control range of the first CCF entity, whether to request to instantiate the API provider entity corresponding to the first API. A network management system instantiates the API provider entity corresponding to the first API, so that the API invoking entity obtains interface information of the first API, to support a function requirement of a multi-EAS scenario, and fully use a computing resource of a mobile edge network.

In another possible design, the second CCF entity receives a second response sent by the first CCF entity, where the second response includes interface information of the first API; and the second CCF entity sends a fifth response to the API invoking entity, where the fifth response includes the interface information of the first API.

In another possible design, the second CCF entity receives third API information sent by a network management system, where the third API information includes an API of an instantiable API provider entity within a control range of the second CCF entity and/or availability of the API of the instantiable API provider entity within the control range of the second CCF entity.

In another possible design, the second CCF entity sends a third request to the first CCF entity; and the second CCF entity receives a third response sent by the first CCF entity, where the third response includes an identifier of the first CCF, and an API of an instantiable API provider entity within the control range of the first CCF entity and/or availability of the API of the instantiable API provider entity within the control range of the first CCF entity.

In another possible design, the second CCF entity sends a fourth response to the API invoking entity, where the fourth response includes availability of APIs of API provider entities within control ranges of a plurality of CCF entities, and the plurality of CCF entities include the first CCF entity and the second CCF entity.

According to a fourteenth aspect, an embodiment of this application provides a communication method. The method includes:
A network management system receives a second request sent by a first common application programming interface framework core function CCF entity, where the second request is used to request to instantiate an API provider entity corresponding to a first API, and the first API is an API requested by an application programming interface API invoking entity; the network management system instantiates the API provider entity corresponding to the first API; and the network management system sends a first response to the first CCF entity, where the first response includes interface information of the first API.

The API invoking entity selects a CCF entity based on availability of APIs of API provider entities within control ranges of a plurality of CCF entities. When an API discovery procedure is executed across CCF entities, the first CCF entity determines, based on availability of a plurality of APIs within a control range of the first CCF entity, whether to request to instantiate the API provider entity corresponding to the first API. The network management system instantiates the API provider entity corresponding to the first API, so that the API invoking entity obtains the interface information of the first API, to support a function requirement of a multi-EAS scenario, and fully use a computing resource of a mobile edge network.

In another possible design, the network management system sends second API information to the first CCF entity, where the second API information includes an API of an instantiable API provider entity within a control range of the first CCF entity and/or availability of the API of the instantiable API provider entity within the control range of the first CCF entity.

In another possible design, the network management system sends third API information to the second CCF entity, where the third API information includes an API of an instantiable API provider entity within a control range of the second CCF entity and/or availability of the API of the instantiable API provider entity within the control range of the second CCF entity.

In another possible design, when the API provider entity corresponding to the first API includes a plurality of API provider entities, the network management system selects a target API provider entity from the plurality of API provider entities; and the network management system instantiates the target API provider entity.

According to a fifteenth aspect, an embodiment of this application provides a communication method. The method includes:
A common application programming interface framework core function CCF entity receives a first request sent by an application programming interface API invoking entity, where the first request includes a first API requested by the API invoking entity; the CCF entity queries, from pre-stored first API information, whether the first API is available, where the first API information includes availability of a plurality of APIs, and the plurality of APIs include the first API; and if the first API is unavailable, the CCF entity determines to request to roll out or activate the first API.

After receiving the first API requested by the API invoking entity, the CCF entity determines, based on availability of the first API, whether to request a second API provider entity to roll out or activate the first API. The second API provider entity rolls out or activates the first API, so that the API invoking entity obtains interface information of the first API, and invokes the first API via the interface information of the first API to provide a service. A corresponding API is rolled out or activated based on a requirement, thereby avoiding a waste of resources of an API provider entity and improving resource utilization.

In another possible design, the CCF entity sends a second request to a second API provider entity, where the second request is used to request to roll out or activate the first API; and the CCF entity receives a first response sent by the second API provider entity, where the first response includes interface information of the first API.

In another possible design, the CCF entity sends a second response to the API invoking entity, where the second response includes the interface information of the first API.

In another possible design, the CCF entity receives second API information sent by the second API provider entity, where the second API information includes an API that can be rolled out or activated and/or availability of the API that can be rolled out or activated.

According to a sixteenth aspect, an embodiment of this application provides a communication method. The method includes:
A second API provider entity receives a second request sent by a common application programming interface framework core function CCF entity, where the second request is used to request to roll out or activate a first API, and the first **API** is an **API** requested by an application programming interface API invoking entity; the second API provider entity rolls out or activates the first API; and the second **API** provider entity sends a first response to the CCF entity, where the first response includes interface information of the first API.

In another possible design, the second API provider entity sends second API information to the CCF entity, where the second API information includes an API that can be rolled out or activated and/or availability of the API that can be rolled out or activated.

After receiving the first API requested by the API invoking entity, the CCF entity determines, based on availability of the first API, whether to request the second API provider entity to roll out or activate the first API. The second API provider entity rolls out or activates the first API, so that the API invoking entity obtains the interface information of the first API, and invokes the first API via the interface information of the first API to provide a service. A corresponding API is rolled out or activated based on a requirement, thereby avoiding a waste of resources of an API provider entity and improving resource utilization.

According to a seventeenth aspect, an embodiment of this application provides a communication method. The method includes:
An application programming interface API invoking entity sends a first request to a common application programming interface framework core function CCF entity, where the first request includes a first API requested by the API invoking entity; and the API invoking entity receives a second response sent by the CCF entity, where the second response includes interface information of the first API obtained by rolling out or activating the first API.

After receiving the first API requested by the API invoking entity, the CCF entity determines, based on availability of the first API, whether to request a second API provider entity to roll out or activate the first API. The second API provider entity rolls out or activates the first API, so that the API invoking entity obtains the interface information of the first API, and invokes the first API via the interface information of the first API to provide a service. A corresponding API is rolled out or activated based on a requirement, thereby avoiding a waste of resources of an API provider entity and improving resource utilization.

According to an eighteenth aspect, an embodiment of this application provides a communication method. The method includes:
An application programming interface API invoking entity receives a first response sent by a common application programming interface framework core function CCF entity, where the first response includes an API that can be rolled out or activated and/or availability of the API that can be rolled out or activated;
the API invoking entity determines, based on the API that can be rolled out or activated and/or the availability of the API that can be rolled out or activated, whether a first API requested by the API invoking entity is available; and
if the first API is unavailable, the API invoking entity determines to request to roll out or activate the first API.

After receiving the API that can be rolled out or activated and/or the availability of the API that can be rolled out or activated, the API invoking entity determines whether to request to roll out or activate the first API. A second API provider entity rolls out or activates an API provider entity corresponding to the first API, so that the API invoking entity obtains interface information of the first API, and invokes the first API via the interface information of the first API to provide a service. A corresponding API is rolled out or activated based on a requirement, thereby avoiding a waste of resources of an API provider entity and improving resource utilization.

In another possible design, the API invoking entity sends a first request to the CCF entity, where the first request indicates the available first API obtained by rolling out or activating the first API; and the API invoking entity receives a second response sent by the CCF entity, where the second response includes interface information of the first API.

According to a nineteenth aspect, an embodiment of this application provides a communication method. The method includes:
A common application programming interface framework core function CCF entity sends a first response to an application programming interface API invoking entity, where the first response includes an API that can be rolled out or activated and/or availability of the API that can be rolled out or activated; and the CCF entity receives a first request sent by the API invoking entity, where the first request indicates an available first API obtained by rolling out or activating the first API.

After receiving the API that can be rolled out or activated and/or the availability of the API that can be rolled out or activated, the API invoking entity determines whether to request to roll out or activate the first API. A second API provider entity rolls out or activates an API provider entity corresponding to the first API, so that the API invoking entity obtains interface information of the first API, and invokes the first API via the interface information of the first API to provide a service. A corresponding API is rolled out or activated based on a requirement, thereby avoiding a waste of resources of an API provider entity and improving resource utilization.

In another possible design, the CCF entity sends a second request to a second API provider entity, where the second request is used to request to roll out or activate the first API; and the CCF entity receives a third response from the second API provider entity, where the third response includes interface information of the first API.

In another possible design, the CCF entity sends a second response to the API invoking entity, where the second response includes the interface information of the first API.

In another possible design, the CCF entity receives first API information sent by the second API provider entity, where the first API information includes the API that can be rolled out or activated and/or the availability of the API that can be rolled out or activated.

According to a twentieth aspect, an embodiment of this application provides a communication method. The method includes:
A second API provider entity receives a second request sent by a common application programming interface framework core function CCF entity, where the second request is used to request to roll out or activate a first API, and the first API is an API requested by an application programming interface API invoking entity; the second API provider entity rolls out or activates the first API; and the second API provider entity sends a third response to the CCF entity, where the third response includes interface information of the first API.

After receiving an API that can be rolled out or activated and/or availability of the API that can be rolled out or activated, the API invoking entity determines whether to request to roll out or activate the first API. The second API provider entity rolls out or activates an API provider entity corresponding to the first API, so that the API invoking entity obtains the interface information of the first API, and invokes the first API via the interface information of the first API to provide a service. A corresponding API is rolled out or activated based on a requirement, thereby avoiding a waste of resources of an API provider entity and improving resource utilization.

In another possible design, the second API provider entity sends first API information to the CCF entity, where the first API information includes an API that can be rolled out or activated and/or availability of the API that can be rolled out or activated.

According to a twenty-first aspect, an embodiment of this application provides a communication method. The method includes:
A first common application programming interface framework core function CCF entity receives a first request sent by a second CCF entity, where the first request includes a first API requested by an API invoking entity; the first CCF entity queries, from pre-stored first API information, whether the first API is available, where the first API information includes availability of a plurality of APIs within a control range of the first CCF entity, and the plurality of APIs include the first API; and if the first API is unavailable, the first CCF determines to request to roll out or activate the first API.

The second CCF entity selects a CCF entity based on availability of APIs within control ranges of a plurality of CCF entities. When an API discovery procedure is executed across CCF entities, the first CCF entity determines, based on the availability of the plurality of APIs within the control range of the first CCF entity, whether to request to roll out or activate the first API. A second API provider entity rolls out or activates the first API, so that the API invoking entity obtains interface information of the first API. A corresponding API is rolled out or activated based on a requirement, thereby avoiding a waste of resources of an API provider entity and improving resource utilization.

In another possible design, the first CCF entity sends a second request to a second API provider entity, where the second request is used to request to roll out or activate the first API; and
the first CCF entity receives a first response sent by the second API provider entity, where the first response includes interface information of the first API.

In another possible design, the first CCF entity sends a second response to the second CCF entity, where the second response includes the interface information of the first API.

In another possible design, the first CCF entity receives second API information sent by the second API provider entity, where the second API information includes an API that can be rolled out or activated within the control range of the first CCF entity and/or availability of the API that can be rolled out or activated within the control range of the first CCF entity.

In another possible design, the first CCF entity sends a third request to the second CCF entity, where the third request includes an identifier of the first CCF, and the API that can be rolled out or activated within the control range of the first CCF entity and/or the availability of the API that can be rolled out or activated within the control range of the first CCF entity.

According to a twenty-second aspect, an embodiment of this application provides a communication method. The method includes:
A second common application programming interface framework core function CCF entity receives a fourth request sent by an API invoking entity, where the fourth request includes a first API requested by the API invoking entity; the second CCF entity queries, from pre-stored third API information, whether the first API is available, where the third API information includes availability of APIs within control ranges of a plurality of CCF entities, and the plurality of CCF entities include a first CCF entity and the second CCF entity; and if the first API is unavailable, the second CCF selects the first CCF entity corresponding to the first API from the plurality of CCF entities.

The second CCF entity selects a CCF entity based on the availability of the APIs within the control ranges of the plurality of CCF entities. When an API discovery procedure is executed across CCF entities, the first CCF entity determines, based on availability of a plurality of APIs within a control range of the first CCF entity, whether to request to roll out or activate the first API. A second API provider entity rolls out or activates the first API, so that the API invoking entity obtains interface information of the first API. A corresponding API is rolled out or activated based on a requirement, thereby avoiding a waste of resources of an API provider entity and improving resource utilization.

In another possible design, the second CCF entity sends a first request to the first CCF entity, where the first request includes the first API requested by the API invoking entity; and the second CCF entity receives a second response sent by the first CCF entity, where the second response includes interface information of the first API.

In another possible design, the second CCF entity receives a third request sent by the first CCF entity, where the third request includes an identifier of the first CCF, and an API that can be rolled out or activated within a control range of the first CCF entity and/or availability of the API that can be rolled out or activated within the control range of the first CCF entity.

In another possible design, the second CCF entity sends a third response to the API invoking entity, where the third response includes the interface information of the first API.

According to a twenty-third aspect, an embodiment of this application provides a communication method. The method includes:
A second API provider entity receives a second request sent by a first common application programming interface framework core function CCF entity, where the second request is used to request to roll out or activate the first API, and the first API is an API requested by an application programming interface API invoking entity; the second API provider entity rolls out or activates the first API; and the second API provider entity sends a first response to the first CCF entity, where the first response includes interface information of the first API.

The second CCF entity selects a CCF entity based on availability of APIs within control ranges of a plurality of CCF entities. When an API discovery procedure is executed across CCF entities, the first CCF entity determines, based on availability of a plurality of APIs within a control range of the first CCF entity, whether to request to roll out or activate the first API. The second API provider entity rolls out or activates the first API, so that the API invoking entity obtains the interface information of the first API. A corresponding API is rolled out or activated based on a requirement, thereby avoiding a waste of resources of an API provider entity and improving resource utilization.

In another possible design, the second API provider entity sends second API information to the first CCF entity, where the second API information includes an API that can be rolled out or activated within a control range of the first CCF entity and/or availability of the API that can be rolled out or activated within the control range of the first CCF entity.

According to a twenty-fourth aspect, an embodiment of this application provides a communication method. The method includes:
An application programming interface API invoking entity sends a fourth request to a second common application programming interface framework core function CCF entity, where the fourth request includes a first API requested by the API invoking entity; and
the API invoking entity receives a third response sent by the second CCF entity, where the third response includes interface information of the first API obtained by rolling out or activating the first API, and the interface information of the first API is used by the API invoking entity to invoke the first API to provide a service.

The second CCF entity selects a CCF entity based on availability of APIs within control ranges of a plurality of CCF entities. When an API discovery procedure is executed across CCF entities, a first CCF entity determines, based on availability of a plurality of APIs within a control range of the first CCF entity, whether to request to roll out or activate the first API. A second API provider entity rolls out or activates the first API, so that the API invoking entity obtains the interface information of the first API. A corresponding API is rolled out or activated based on a requirement, thereby avoiding a waste of resources of an API provider entity and improving resource utilization.

According to a twenty-fifth aspect, an embodiment of this application provides a communication method. The method includes:
A first common application programming interface framework core function CCF entity receives a first request sent by a second CCF entity, where the first request includes a first API requested by an application programming interface API invoking entity; the first CCF entity queries, from pre-stored first API information, whether the first API is available, where the first API information includes availability of a plurality of APIs within a control range of the first CCF entity, and the plurality of APIs include the first API; and if the first API is unavailable, the first CCF determines to request to roll out or activate the first API.

The API invoking entity selects a CCF entity based on availability of APIs within control ranges of a plurality of CCF entities. When an API discovery procedure is executed across CCF entities, the first CCF entity determines, based on the availability of the plurality of APIs within the control range of the first CCF entity, whether to request to roll out or activate the first API. A second API provider entity rolls out or activates an API provider entity corresponding to the first API, so that the API invoking entity obtains interface information of the first API. A corresponding API is rolled out or activated based on a requirement, thereby avoiding a waste of resources of an API provider entity and improving resource utilization.

In another possible design, the first CCF entity sends a second request to a second API provider entity, where the second request is used to request to roll out or activate the first API; and the first CCF entity receives a first response sent by the second API provider entity, where the first response includes interface information of the first API.

In another possible design, the first CCF entity sends a second response to the second CCF entity, where the second response includes the interface information of the first API.

In another possible design, the first CCF entity receives second API information sent by the second API provider entity, where the second API information includes an API that can be rolled out or activated within the control range of the first CCF entity and/or availability of the API that can be rolled out or activated within the control range of the first CCF entity.

In another possible design, the first CCF entity receives a third request sent by the second CCF entity; and
the first CCF entity sends a third response to the second CCF entity, where the third response includes an identifier of the first CCF, and the API that can be rolled out or activated within the control range of the first CCF entity and/or the availability of the API that can be rolled out or activated within the control range of the first CCF entity.

According to a twenty-sixth aspect, an embodiment of this application provides a communication method. The method includes:
An application programming interface API invoking entity receives a fourth response sent by a second common application programming interface framework core function CCF entity, where the fourth response includes availability of APIs within control ranges of a plurality of CCF entities, and the plurality of CCF entities include a first CCF entity and the second CCF entity; the API invoking entity determines, based on the availability of the APIs of API provider entities within the control ranges of the plurality of CCF entities, whether a first API requested by the API invoking entity is available; and if the first API is unavailable, the API invoking entity selects the first CCF entity corresponding to the first API from the plurality of CCF entities.

The API invoking entity selects a CCF entity based on the availability of the APIs within the control ranges of the plurality of CCF entities. When an API discovery procedure is executed across CCF entities, the first CCF entity determines, based on availability of a plurality of APIs within a control range of the first CCF entity, whether to request to roll out or activate the first API. A second API provider entity rolls out or activates an API provider entity corresponding to the first API, so that the API invoking entity obtains interface information of the first API. A corresponding API is rolled out or activated based on a requirement, thereby avoiding a waste of resources of an API provider entity and improving resource utilization.

In another possible design, the API invoking entity sends a fourth request to the second CCF entity, where the fourth request includes an identifier of the first CCF entity and the first API, and the identifier of the first CCF entity and the first API are used to request to roll out or activate the first API within a control range of the first CCF entity; and the API invoking entity receives a fifth response sent by the second CCF entity, where the fifth response includes interface information of the first API.

According to a twenty-seventh aspect, an embodiment of this application provides a communication method. The method includes:
A second common application programming interface framework core function CCF entity receives a fourth request sent by an API invoking entity, where the fourth request includes an identifier of a first CCF entity and a first API requested by the application programming interface API invoking entity, and the identifier of the first CCF entity and the first API are used to request to roll out or activate the first API within a control range of the first CCF entity; and the second CCF entity sends a first request to the first CCF entity, where the first request includes the first API requested by the application programming interface API invoking entity.

The API invoking entity selects a CCF entity based on availability of APIs within control ranges of a plurality of CCF entities. When an API discovery procedure is executed across CCF entities, the first CCF entity determines, based on availability of a plurality of APIs within the control range of the first CCF entity, whether to request to roll out or activate the first API. A second API provider entity rolls out or activates an API provider entity corresponding to the first API, so that the API invoking entity obtains interface information of the first API. A corresponding API is rolled out or activated based on a requirement, thereby avoiding a waste of resources of an API provider entity and improving resource utilization.

In another possible design, the second CCF entity receives a second response sent by the first CCF entity, where the second response includes interface information of the first API; and the second CCF entity sends a fifth response to the API invoking entity, where the fifth response includes the interface information of the first API.

In another possible design, the second CCF entity sends a third request to the first CCF entity; and the second CCF entity receives a third response sent by the first CCF entity, where the third response includes an identifier of the first CCF, and an API that can be rolled out or activated within the control range of the first CCF entity and/or availability of the API that can be rolled out or activated within the control range of the first CCF entity.

In another possible design, the second CCF entity sends a fourth response to the API invoking entity, where the fourth response includes availability of APIs within control ranges of a plurality of CCF entities, and the plurality of CCF entities include the first CCF entity and the second CCF entity.

According to a twenty-eighth aspect, an embodiment of this application provides a communication method. The method includes:
A second API provider entity receives a second request sent by a first common application programming interface framework core function CCF entity, where the second request is used to request to roll out or activate a first API, and the first API is an API requested by an application programming interface API invoking entity; the second API provider entity rolls out or activates the first API; and the second API provider entity sends a first response to the first CCF entity, where the first response includes interface information of the first API.

The API invoking entity selects a CCF entity based on availability of APIs within control ranges of a plurality of CCF entities. When an API discovery procedure is executed across CCF entities, the first CCF entity determines, based on availability of a plurality of APIs within a control range of the first CCF entity, whether to request to roll out or activate the first API. The second API provider entity rolls out or activates an API provider entity corresponding to the first API, so that the API invoking entity obtains the interface information of the first API. A corresponding API is rolled out or activated based on a requirement, thereby avoiding a waste of resources of an API provider entity and improving resource utilization.

In another possible design, the second API provider entity sends second API information to the first CCF entity, where the second API information includes an API that can be rolled out or activated within a control range of the first CCF entity and/or availability of the API that can be rolled out or activated within the control range of the first CCF entity.

According to a twenty-ninth aspect, an embodiment of this application provides a communication apparatus. The apparatus includes:
a receiving module, configured to receive a first request sent by an application programming interface API invoking entity, where the first request includes a first API requested by the API invoking entity;
a processing module, configured to query, from pre-stored first API information, whether the first API is available, where the first API information includes availability of a plurality of APIs, and the plurality of APIs include the first API; and if the first API is unavailable, determine to request to instantiate an API provider entity corresponding to the first API.

In another possible design, a sending module is configured to send a second request to a network management system, where the second request is used to request to instantiate the API provider entity corresponding to the first API.

The receiving module is further configured to receive a first response sent by the network management system, where the first response includes interface information of the first API.

In another possible design, the sending module is further configured to send a second response to the API invoking entity, where the second response includes the interface information of the first API.

In another possible design, the receiving module is further configured to receive second API information sent by the network management system, where the second API information includes an API of an instantiable API provider entity and/or availability of the API of the instantiable API provider entity.

According to a thirtieth aspect, an embodiment of this application provides a communication apparatus. The apparatus includes:
a receiving module, configured to receive a second request sent by a common application programming interface framework core function CCF entity, where the second request is used to request to instantiate an API provider entity corresponding to a first API, and the first API is an API requested by an application programming interface API invoking entity;
a processing module, configured to instantiate the API provider entity corresponding to the first API; and
a sending module, configured to send a first response to the CCF entity, where the first response includes interface information of the first API.

In another possible design, the sending module is further configured to send second API information to the CCF entity, where the second API information includes an API of an instantiable API provider entity and/or availability of the API of the instantiable API provider entity.

In another possible design, the processing module is further configured to: when the API provider entity corresponding to the first API includes a plurality of API provider entities, select a target API provider entity from the plurality of API provider entities; and instantiate the target API provider entity.

According to a thirty-first aspect, an embodiment of this application provides a communication apparatus. The apparatus includes:
a sending module, configured to send a first request to a common application programming interface framework core function CCF entity, where the first request includes a first API requested by an API invoking entity; and
a receiving module, configured to receive a second response sent by the CCF entity, where the second response includes interface information of the first API obtained by instantiating an API provider entity corresponding to the first API.

According to a thirty-second aspect, an embodiment of this application provides a communication apparatus. The apparatus includes:
a receiving module, configured to receive a first response sent by a common application programming interface framework core function CCF entity, where the first response includes an API of an instantiable API provider entity and/or availability of the API of the instantiable API provider entity; and
a processing module, configured to determine, based on the API of the instantiable API provider entity and/or the availability of the API of the instantiable API provider entity, whether a first API requested by an API invoking entity is available; and if the first API is unavailable, determine to request to instantiate an API provider entity corresponding to the first API.

In another possible design, a sending module is configured to send a first request to the CCF entity, where the first request indicates the available first API obtained by instantiating the API provider entity corresponding to the first API.

The receiving module is further configured to receive a second response sent by the CCF entity, where the second response includes interface information of the first API.

According to a thirty-third aspect, an embodiment of this application provides a communication apparatus. The apparatus includes:
a sending module, configured to send a first response to an application programming interface API invoking entity, where the first response includes an API of an instantiable API provider entity and/or availability of the API of the instantiable API provider entity; and
a receiving module, configured to receive a first request sent by the API invoking entity, where the first request indicates an available first API obtained by instantiating an API provider entity corresponding to the first API.

In another possible design, the sending module is configured to send a second request to a network management system, where the second request is used to request to instantiate the API provider entity corresponding to the first API.

The receiving module is further configured to receive a third response from the network management system, where the third response includes interface information of the first API.

In another possible design, the sending module is further configured to send a second response to the API invoking entity, where the second response includes the interface information of the first API.

In another possible design, the receiving module is further configured to receive first API information sent by the network management system, where the first API information includes the API of the instantiable API provider entity and/or the availability of the API of the instantiable API provider entity.

According to a thirty-fourth aspect, an embodiment of this application provides a communication apparatus. The apparatus includes:
a receiving module, configured to receive a second request sent by a common application programming interface framework core function CCF entity, where the second request is used to request to instantiate an API provider entity corresponding to a first API, and the first API is an API requested by an application programming interface API invoking entity;
a processing module, configured to instantiate the API provider entity corresponding to the first API; and
a sending module, configured to send a third response to the CCF entity, where the third response includes interface information of the first API.

In another possible design, the sending module is further configured to send first API information to the CCF entity, where the first API information includes an API of an instantiable API provider entity and/or availability of the API of the instantiable API provider entity.

In another possible design, the processing module is further configured to: when the API provider entity corresponding to the first API includes a plurality of API provider entities, select a target API provider entity from the plurality of API provider entities; and instantiate the target API provider entity.

According to a thirty-fifth aspect, an embodiment of this application provides a communication apparatus. The apparatus includes:
a receiving module, configured to receive a first request sent by a second CCF entity, where the first request includes a first API requested by an API invoking entity; and
a processing module, configured to query, from pre-stored first API information, whether the first API is available, where the first API information includes availability of a plurality of APIs within a control range of a first CCF entity, and the plurality of APIs include the first API; and if the first API is unavailable, determine to request to instantiate an API provider entity corresponding to the first API.

In another possible design, a sending module is configured to send a second request to a network management system, where the second request is used to request to instantiate the API provider entity corresponding to the first API.

The receiving module is further configured to receive a first response sent by the network management system, where the first response includes interface information of the first API.

In another possible design, the sending module is further configured to send a second response to the second CCF entity, where the second response includes the interface information of the first API.

In another possible design, the receiving module is further configured to receive second API information sent by the network management system, where the second API information includes an API of an instantiable API provider entity within the control range of the first CCF entity and/or availability of the API of the instantiable API provider entity within the control range of the first CCF entity.

In another possible design, the sending module is configured to send a third request to the second CCF entity, where the third request includes an identifier of the first CCF, and the API of the instantiable API provider entity within the control range of the first CCF entity and/or the availability of the API of the instantiable API provider entity within the control range of the first CCF entity.

According to a thirty-sixth aspect, an embodiment of this application provides a communication apparatus. The apparatus includes:
a receiving module, configured to receive a fourth request sent by an API invoking entity, where the fourth request includes a first API requested by the API invoking entity; and
a processing module, configured to query, from pre-stored third API information, whether the first API is available, where the third API information includes availability of APIs of API provider entities within control ranges of a plurality of CCF entities, and the plurality of CCF entities include a first CCF entity and a second CCF entity; and if the first API is unavailable, selects the first CCF entity corresponding to the first API from the plurality of CCF entities.

In another possible design, a sending module is configured to send a first request to the first CCF entity, where the first request includes the first API requested by the API invoking entity.

The receiving module is further configured to receive a second response sent by the first CCF entity, where the second response includes interface information of the first API.

In another possible design, the receiving module is further configured to receive a third request sent by the first CCF entity, where the third request includes an identifier of the first CCF, and an API of an instantiable API provider entity within a control range of the first CCF entity and/or availability of the API of the instantiable API provider entity within the control range of the first CCF entity.

In another possible design, the sending module is configured to send a third response to the API invoking entity, where the third response includes the interface information of the first API.

In another possible design, the receiving module is further configured to receive fourth API information sent by a network management system, where the fourth API information includes an API of an instantiable API provider entity within a control range of the second CCF entity and/or availability of the API of the instantiable API provider entity within the control range of the second CCF entity.

According to a thirty-seventh aspect, an embodiment of this application provides a communication apparatus. The apparatus includes:
a receiving module, configured to receive a second request sent by a first common application programming interface framework core function CCF entity, where the second request is used to request to instantiate an API provider entity corresponding to a first API, and the first API is an API requested by an application programming interface API invoking entity;
a processing module, configured to instantiate the API provider entity corresponding to the first API; and
a sending module, configured to send a first response to the first CCF entity, where the first response includes interface information of the first API.

In another possible design, the sending module is further configured to send second API information to the first CCF entity, where the second API information includes an API of an instantiable API provider entity within a control range of the first CCF entity and/or availability of the API of the instantiable API provider entity within the control range of the first CCF entity.

In another possible design, the sending module is further configured to send fourth API information to the second CCF entity, where the fourth API information includes an API of an instantiable API provider entity within a control range of the second CCF entity and/or availability of the API of the instantiable API provider entity within the control range of the second CCF entity.

In another possible design, the processing module is further configured to: when the API provider entity corresponding to the first API includes a plurality of API provider entities, select a target API provider entity from the plurality of API provider entities; and instantiate the target API provider entity.

According to a thirty-eighth aspect, an embodiment of this application provides a communication apparatus. The apparatus includes:
a sending module, configured to send a fourth request to a second common application programming interface framework core function CCF entity, where the fourth request includes a first API requested by an API invoking entity; and
a receiving module, configured to receive a third response sent by the second CCF entity, where the third response includes interface information of the first API obtained by instantiating an API provider entity corresponding to the first API, and the interface information of the first API is used by the API invoking entity to invoke the first API to provide a service.

According to a thirty-ninth aspect, an embodiment of this application provides a communication apparatus. The apparatus includes:
a receiving module, configured to receive a first request sent by a second CCF entity, where the first request includes a first API requested by an application programming interface API invoking entity; and
a processing module, configured to query, from pre-stored first API information, whether the first API is available, where the first API information includes availability of a plurality of APIs within a control range of a first CCF entity, and the plurality of APIs include the first API; and if the first API is unavailable, determine to request to instantiate an API provider entity corresponding to the first API.

In another possible design, a sending module is configured to send a second request to a network management system, where the second request is used to request to instantiate the API provider entity corresponding to the first API.

The receiving module is further configured to receive a first response sent by the network management system, where the first response includes interface information of the first API.

In another possible design, the sending module is further configured to send a second response to the second CCF entity, where the second response includes the interface information of the first API.

In another possible design, the receiving module is further configured to receive second API information sent by the network management system, where the second API information includes an API of an instantiable API provider entity within the control range of the first CCF entity and/or availability of the API of the instantiable API provider entity within the control range of the first CCF entity.

In another possible design, the receiving module is further configured to receive a third request sent by the second CCF entity.

The sending module is configured to send a third response to the second CCF entity, where the third response includes an identifier of the first CCF, and the API of the instantiable API provider entity within the control range of the first CCF entity and/or the availability of the API of the instantiable API provider entity within the control range of the first CCF entity.

According to a fortieth aspect, an embodiment of this application provides a communication apparatus. The apparatus includes:
a receiving module, configured to receive a fourth response sent by a second common application programming interface framework core function CCF entity, where the fourth response includes availability of APIs of API provider entities within control ranges of a plurality of CCF entities, and the plurality of CCF entities include a first CCF entity and the second CCF entity; and
a processing module, configured to determine, based on the availability of the APIs of the API provider entities within the control ranges of the plurality of CCF entities, whether a first API requested by an API invoking entity is available; and if the first API is unavailable, select the first CCF entity corresponding to the first API from the plurality of CCF entities.

In another possible design, a sending module is configured to send a fourth request to the second CCF entity, where the fourth request includes an identifier of the first CCF entity and the first API, and the identifier of the first CCF entity and the first API are used to request to instantiate an API provider entity corresponding to the first API within a control range of the first CCF entity.

The receiving module is further configured to receive a fifth response sent by the second CCF entity, where the fifth response includes interface information of the first API.

According to a forty-first aspect, an embodiment of this application provides a communication apparatus. The apparatus includes:
a receiving module, configured to receive a fourth request sent by an API invoking entity, where the fourth request includes an identifier of a first CCF entity and a first API requested by the application programming interface API invoking entity, and the identifier of the first CCF entity and the first API are used to request to instantiate an API provider entity corresponding to the first API within a control range of the first CCF entity; and
a sending module, configured to send a first request to the first CCF entity, where the first request includes the first API requested by the application programming interface API invoking entity.

In another possible design, the receiving module is configured to receive a second response sent by the first CCF entity, where the second response includes interface information of the first API.

The sending module is configured to send a fifth response to the API invoking entity, where the fifth response includes the interface information of the first API.

In another possible design, the receiving module is further configured to receive third API information sent by a network management system, where the third API information includes an API of an instantiable API provider entity within a control range of a second CCF entity and/or availability of the API of the instantiable API provider entity within the control range of the second CCF entity.

In another possible design, the sending module is further configured to send a third request to the first CCF entity.

The receiving module is further configured to receive a third response sent by the first CCF entity, where the third response includes an identifier of the first CCF, and an API of an instantiable API provider entity within the control range of the first CCF entity and/or availability of the API of the instantiable API provider entity within the control range of the first CCF entity.

In another possible design, the sending module is further configured to send a fourth response to the API invoking entity, where the fourth response includes availability of APIs of API provider entities within control ranges of a plurality of CCF entities, and the plurality of CCF entities include the first CCF entity and the second CCF entity.

According to a forty-second aspect, an embodiment of this application provides a communication apparatus. The apparatus includes:
a receiving module, configured to receive a second request sent by a first common application programming interface framework core function CCF entity, where the second request is used to request to instantiate an API provider entity corresponding to a first API, and the first API is an API requested by an application programming interface API invoking entity;
a processing module, configured to instantiate the API provider entity corresponding to the first API; and
a sending module, configured to send a first response to the first CCF entity, where the first response includes interface information of the first API.

In another possible design, the sending module is further configured to send second API information to the first CCF entity, where the second API information includes an API of an instantiable API provider entity within a control range of the first CCF entity and/or availability of the API of the instantiable API provider entity within the control range of the first CCF entity.

In another possible design, the sending module is further configured to send third API information to the second CCF entity, where the third API information includes an API of an instantiable API provider entity within a control range of the second CCF entity and/or availability of the API of the instantiable API provider entity within the control range of the second CCF entity.

In another possible design, the processing module is further configured to: when the API provider entity corresponding to the first API includes a plurality of API provider entities, select a target API provider entity from the plurality of API provider entities; and instantiate the target API provider entity.

According to a forty-third aspect, an embodiment of this application provides a communication apparatus. The apparatus includes:
a receiving module, configured to receive a first request sent by an application programming interface API invoking entity, where the first request includes a first API requested by the API invoking entity; and
a processing module, configured to query, from pre-stored first API information, whether the first API is available, where the first API information includes availability of a plurality of APIs, and the plurality of APIs include the first API; and if the first API is unavailable, determine to request to roll out or activate the first API.

In another possible design, a sending module is configured to send a second request to a second API provider entity, where the second request is used to request to roll out or activate the first API.

The receiving module is further configured to receive a first response sent by the second API provider entity, where the first response includes interface information of the first API.

In another possible design, the sending module is further configured to send a second response to the API invoking entity, where the second response includes the interface information of the first API.

In another possible design, the receiving module is further configured to receive second API information sent by the second API provider entity, where the second API information includes an API that can be rolled out or activated and/or availability of the API that can be rolled out or activated.

According to a forty-fourth aspect, an embodiment of this application provides a communication apparatus. The apparatus includes:
a receiving module, configured to receive a second request sent by a common application programming interface framework core function CCF entity, where the second request is used to request to roll out or activate a first API, and the first **API** is an **API** requested by an application programming interface API invoking entity;
a processing module, configured to roll out or activate the first API; and
a sending module, configured to send a first response to the CCF entity, where the first response includes interface information of the first API.

In another possible design, the sending module is further configured to send second API information to the CCF entity, where the second API information includes an API that can be rolled out or activated and/or availability of the API that can be rolled out or activated.

According to a forty-fifth aspect, an embodiment of this application provides a communication apparatus. The apparatus includes:
a sending module, configured to send a first request to a common application programming interface framework core function CCF entity, where the first request includes a first API requested by an API invoking entity; and
a receiving module, configured to receive a second response sent by the CCF entity, where the second response includes interface information of the first API obtained by rolling out or activating the first API.

According to a forty-sixth aspect, an embodiment of this application provides a communication apparatus. The apparatus includes:
a receiving module, configured to receive a first response sent by a common application programming interface framework core function CCF entity, where the first response includes an API that can be rolled out or activated and/or availability of the API that can be rolled out or activated; and
a processing module, configured to determine, based on the API that can be rolled out or activated and/or the availability of the API that can be rolled out or activated, whether a first API requested by an API invoking entity is available; and if the first API is unavailable, determine to request to roll out or activate the first API.

In another possible design, a sending module is configured to send a first request to the CCF entity, where the first request indicates the available first API obtained by rolling out or activating the first API.

The receiving module is further configured to receive a second response sent by the CCF entity, where the second response includes interface information of the first API.

According to a forty-seventh aspect, an embodiment of this application provides a communication apparatus. The apparatus includes:
a sending module, configured to send a first response to an application programming interface API invoking entity, where the first response includes an API that can be rolled out or activated and/or availability of the API that can be rolled out or activated; and
a receiving module, configured to receive a first request sent by the API invoking entity, where the first request indicates an available first API obtained by rolling out or activating the first API.

In another possible design, the sending module is configured to send a second request to a second API provider entity, where the second request is used to request to roll out or activate the first API.

The receiving module is configured to receive a third response from the second API provider entity, where the third response includes interface information of the first API.

In another possible design, the sending module is further configured to send a second response to the API invoking entity, where the second response includes the interface information of the first API.

In another possible design, the receiving module is further configured to receive first API information sent by the second API provider entity, where the first API information includes the API that can be rolled out or activated and/or the availability of the API that can be rolled out or activated.

According to a forty-eighth aspect, an embodiment of this application provides a communication apparatus. The apparatus includes:
a receiving module, configured to receive a second request sent by a common application programming interface framework core function CCF entity, where the second request is used to request to roll out or activate a first API, and the first API is an API requested by an application programming interface API invoking entity;
a processing module, configured to roll out or activate the first API; and
a sending module, configured to send a third response to the CCF entity, where the third response includes interface information of the first API.

In another possible design, the sending module is further configured to send first API information to the CCF entity, where the first API information includes an API that can be rolled out or activated and/or availability of the API that can be rolled out or activated.

According to a forty-ninth aspect, an embodiment of this application provides a communication apparatus. The apparatus includes:
a receiving module, configured to receive a first request sent by a second CCF entity, where the first request includes a first API requested by an API invoking entity; and
a processing module, configured to query, from pre-stored first API information, whether the first API is available, where the first API information includes availability of a plurality of APIs within a control range of a first CCF entity, and the plurality of APIs include the first API; and if the first API is unavailable, determine to request to roll out or activate the first API.

In another possible design, a sending module is configured to send a second request to a second API provider entity, where the second request is used to request to roll out or activate the first API.

The receiving module is further configured to receive a first response sent by the second API provider entity, where the first response includes interface information of the first API.

In another possible design, the sending module is further configured to send a second response to the second CCF entity, where the second response includes the interface information of the first API.

In another possible design, the receiving module is further configured to receive second API information sent by the second API provider entity, where the second API information includes an API that can be rolled out or activated within the control range of the first CCF entity and/or availability of the API that can be rolled out or activated within the control range of the first CCF entity.

In another possible design, the sending module is configured to send a third request to the second CCF entity, where the third request includes an identifier of the first CCF, and the API that can be rolled out or activated within the control range of the first CCF entity and/or the availability of the API that can be rolled out or activated within the control range of the first CCF entity.

According to a fiftieth aspect, an embodiment of this application provides a communication apparatus. The apparatus includes:
a receiving module, configured to receive a fourth request sent by an API invoking entity, where the fourth request includes a first API requested by the API invoking entity; and
a processing module, configured to query, from pre-stored third API information, whether the first API is available, where the third API information includes availability of APIs within control ranges of a plurality of CCF entities, and the plurality of CCF entities include a first CCF entity and a second CCF entity; and if the first API is unavailable, select the first CCF entity corresponding to the first API from the plurality of CCF entities.

In another possible design, a sending module is configured to send a first request to the first CCF entity, where the first request includes the first API requested by the API invoking entity.

The receiving module is further configured to receive a second response sent by the first CCF entity, where the second response includes interface information of the first API.

In another possible design, the receiving module is further configured to receive a third request sent by the first CCF entity, where the third request includes an identifier of the first CCF, and an API that can be rolled out or activated within a control range of the first CCF entity and/or availability of the API that can be rolled out or activated within the control range of the first CCF entity.

In another possible design, the sending module is configured to send a third response to the API invoking entity, where the third response includes the interface information of the first API.

According to a fifty-first aspect, an embodiment of this application provides a communication apparatus. The apparatus includes:
a receiving module, configured to receive a second request sent by a first common application programming interface framework core function CCF entity, where the second request is used to request to roll out or activate a first API, and the first API is an API requested by an application programming interface API invoking entity;
a processing module, configured to roll out or activate the first API; and
a sending module, configured to send a first response to the first CCF entity, where the first response includes interface information of the first API.

In another possible design, the sending module is further configured to send second API information to the first CCF entity, where the second API information includes an API that can be rolled out or activated within a control range of the first CCF entity and/or availability of the API that can be rolled out or activated within the control range of the first CCF entity.

According to a fifty-second aspect, an embodiment of this application provides a communication apparatus. The apparatus includes:
a sending module, configured to send a fourth request to a second common application programming interface framework core function CCF entity, where the fourth request includes a first API requested by an API invoking entity; and
a receiving module, configured to receive a third response sent by the second CCF entity, where the third response includes interface information of the first API obtained by rolling out or activating the first API, and the interface information of the first API is used by the API invoking entity to invoke the first API to provide a service.

According to a fifty-third aspect, an embodiment of this application provides a communication apparatus. The apparatus includes:
a receiving module, configured to receive a first request sent by a second CCF entity, where the first request includes a first API requested by an application programming interface API invoking entity; and
a processing module, configured to query, from pre-stored first API information, whether the first API is available, where the first API information includes availability of a plurality of APIs within a control range of a first CCF entity, and the plurality of APIs include the first API; and if the first API is unavailable, determine to request to roll out or activate the first API.

In another possible design, a sending module is configured to send a second request to a second API provider entity, where the second request is used to request to roll out or activate the first API.

The receiving module is further configured to receive a first response sent by the second API provider entity, where the first response includes interface information of the first API.

In another possible design, the sending module is further configured to send a second response to the second CCF entity, where the second response includes the interface information of the first API.

In another possible design, the receiving module is further configured to receive second API information sent by the second API provider entity, where the second API information includes an API that can be rolled out or activated within the control range of the first CCF entity and/or availability of the API that can be rolled out or activated within the control range of the first CCF entity.

In another possible design, the receiving module is further configured to receive a third request sent by the second CCF entity.

The sending module is configured to send a third response to the second CCF entity, where the third response includes an identifier of the first CCF, and the API that can be rolled out or activated within the control range of the first CCF entity and/or the availability of the API that can be rolled out or activated within the control range of the first CCF entity.

According to a fifty-fourth aspect, an embodiment of this application provides a communication apparatus. The apparatus includes:
a receiving module, configured to receive a fourth response sent by a second common application programming interface framework core function CCF entity, where the fourth response includes availability of APIs within control ranges of a plurality of CCF entities, and the plurality of CCF entities include a first CCF entity and the second CCF entity; and
a processing module, configured to determine, based on the availability of the APIs of API provider entities within the control ranges of the plurality of CCF entities, whether a first API requested by an API invoking entity is available; and if the first API is unavailable, select the first CCF entity corresponding to the first API from the plurality of CCF entities.

In another possible design, a sending module is configured to send a fourth request to the second CCF entity, where the fourth request includes an identifier of the first CCF entity and the first API, and the identifier of the first CCF entity and the first API are used to request to roll out or activate the first API within a control range of the first CCF entity.

The receiving module is further configured to receive a fifth response sent by the second CCF entity, where the fifth response includes interface information of the first API.

According to a fifty-fifth aspect, an embodiment of this application provides a communication apparatus. The apparatus includes:
a receiving module, configured to receive a fourth request sent by an API invoking entity, where the fourth request includes an identifier of a first CCF entity and a first API requested by the application programming interface API invoking entity, and the identifier of the first CCF entity and the first API are used to request to roll out or activate the first API within a control range of the first CCF entity; and
a sending module, configured to send a first request to the first CCF entity, where the first request includes the first API requested by the application programming interface API invoking entity.

In another possible design, the receiving module is configured to receive a second response sent by the first CCF entity, where the second response includes interface information of the first API.

The sending module is configured to send a fifth response to the API invoking entity, where the fifth response includes the interface information of the first API.

In another possible design, the sending module is further configured to send a third request to the first CCF entity.

The receiving module is further configured to receive a third response sent by the first CCF entity, where the third response includes an identifier of the first CCF, and an API that can be rolled out or activated within the control range of the first CCF entity and/or availability of the API that can be rolled out or activated within the control range of the first CCF entity.

In another possible design, the sending module is further configured to send a fourth response to the API invoking entity, where the fourth response includes availability of APIs within control ranges of a plurality of CCF entities, and the plurality of CCF entities include the first CCF entity and a second CCF entity.

According to a fifty-sixth aspect, an embodiment of this application provides a communication apparatus. The apparatus includes:
a receiving module, configured to receive a second request sent by a first common application programming interface framework core function CCF entity, where the second request is used to request to roll out or activate a first AP, and the first API is an API requested by an application programming interface API invoking entity;
a processing module, configured to roll out or activate the first API; and
a sending module, configured to send a first response to the first CCF entity, where the first response includes interface information of the first API.

In another possible design, the sending module is further configured to send second API information to the first CCF entity, where the second API information includes an API that can be rolled out or activated within a control range of the first CCF entity and/or availability of the API that can be rolled out or activated within the control range of the first CCF entity.

For operations performed by the communication apparatuses and beneficial effects thereof, refer to the methods in the first aspect to the twenty-eighth aspect and the beneficial effects thereof. Repeated content is not described again.

According to a fifty-seventh aspect, this application provides an API invoking entity. The API invoking entity includes a processor and a memory. The memory is configured to store computer-executable instructions, and the processor is configured to execute the computer-executable instructions stored in the memory, to enable the API invoking entity to perform the method according to any one of the third aspect, the fourth aspect, the tenth aspect, the twelfth aspect, the seventeenth aspect, the eighteenth aspect, the twenty-fourth aspect, and the twenty-sixth aspect.

According to a fifty-eighth aspect, this application provides an API provider entity. The API provider entity includes a processor and a memory. The memory is configured to store computer-executable instructions, and the processor is configured to execute the computer-executable instructions stored in the memory, to enable the API provider entity to perform the method according to any one of the second aspect, the sixteenth aspect, the twentieth aspect, the twenty-third aspect, and the twenty-eighth aspect.

According to a fifty-ninth aspect, this application provides a CCF entity. The CCF entity includes a processor and a memory. The memory is configured to store computer-executable instructions, and the processor is configured to execute the computer-executable instructions stored in the memory, to enable the CCF entity to perform the method according to any one of the first aspect, the fifth aspect, the seventh aspect, the eighth aspect, the eleventh aspect, the thirteenth aspect, the fifteenth aspect, the nineteenth aspect, the twenty-first aspect, the twenty-second aspect, the twenty-fifth aspect, and the twenty-seventh aspect.

According to a sixtieth aspect, this application provides a network management system. The network management system includes a processor and a memory. The memory is configured to store computer-executable instructions, and the processor is configured to execute the computer-executable instructions stored in the memory, to enable the network management system to perform the method according to any one of the second aspect, the sixth aspect, the ninth aspect, and the fourteenth aspect.

According to a sixty-first aspect, this application provides a computer-readable storage medium. The computer-readable storage medium is configured to store a computer program. When the computer program is executed, the method according to any one of the first aspect to the twenty-eighth aspect is implemented.

According to a sixty-second aspect, this application provides a computer program product including a computer program. When the computer program is executed, the method according to any one of the first aspect to the twenty-eighth aspect is implemented.

According to a sixty-third aspect, this application provides a communication system. The communication system includes an API invoking entity, an API provider entity, a network management system, and a CCF entity. The API invoking entity is configured to perform the method according to any one of the third aspect, the fourth aspect, the tenth aspect, the twelfth aspect, the seventeenth aspect, the eighteenth aspect, the twenty-fourth aspect, and the twenty-sixth aspect. The API provider entity is configured to perform the method according to any one of the second aspect, the sixteenth aspect, the twentieth aspect, the twenty-third aspect, and the twenty-eighth aspect, the CCF entity is configured to perform the method according to any one of the first aspect, the fifth aspect, the seventh aspect, the eighth aspect, the eleventh aspect, the thirteenth aspect, the fifteenth aspect, the nineteenth aspect, the twenty-first aspect, the twenty-second aspect, the twenty-fifth aspect, and the twenty-seventh aspect, and the network management system is configured to perform the method according to any one of the second aspect, the sixth aspect, the ninth aspect, and the fourteenth aspect.

According to a sixty-fourth aspect, this application provides a communication system. The communication system includes a CCF entity, an API invoking entity, an API provider entity, and a network management system. The CCF entity is an edge enabler server EES, the API invoking entity is a first edge application server EAS, the API provider entity is an EAS other than the first EAS, and the network management system is an EAS instantiation management system.

### BRIEF DESCRIPTION OF DRAWINGS

To describe technical solutions in embodiments of this application or in the background more clearly, the following briefly describes the accompanying drawings for describing embodiments of this application or the background.
FIG. 1 shows an SA6 MEC architecture;
FIG. 2 shows an SA6 common API framework;
FIG. 3 is a diagram of a multi-EAS scenario;
FIG. 4 is a diagram of an EAS instantiation procedure;
FIG. 5 is a diagram of another EAS instantiation procedure;
FIG. 6 is a diagram of an API publishing procedure;
FIG. 7 is a diagram of an API discovery procedure;
FIG. 8 is a schematic flowchart of a communication method according to an embodiment of this application;
FIG. 9 is a schematic flowchart of another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a schematic flowchart of still another communication method according to an embodiment of this application;
FIG. 14 is a schematic flowchart of still another communication method according to an embodiment of this application;
FIG. 15 is a schematic flowchart of still another communication method according to an embodiment of this application;
FIG. 16 is a diagram of a structure of a communication apparatus according to an embodiment of this application;
FIG. 17 is a diagram of a structure of another communication apparatus according to an embodiment of this application;
FIG. 18 is a diagram of a structure of still another communication apparatus according to an embodiment of this application;
FIG. 19 is a diagram of a structure of still another communication apparatus according to an embodiment of this application;
FIG. 20 is a diagram of a structure of a CCF entity according to an embodiment of this application;
FIG. 21 is a diagram of a structure of a network management system according to an embodiment of this application;
FIG. 22 is a diagram of a structure of an API invoking entity according to an embodiment of this application; and
FIG. 23 is a diagram of a structure of an API provider entity according to an embodiment of this application.

### DESCRIPTION OF EMBODIMENTS

The following describes embodiments of this application with reference to the accompanying drawings in embodiments of this application.

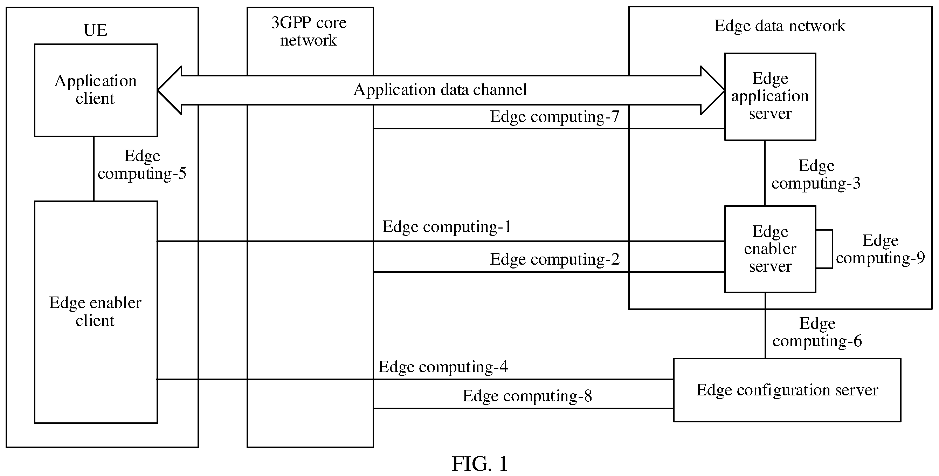

FIG. 1 shows an SA6 MEC architecture. The SA6 MEC architecture includes a user equipment (user equipment, UE), a 3rd generation partnership project (3rd generation partnership project, 3GPP) core network, and an edge data network (edge data network, EDN). The UE includes an application client (application client, AC) and an edge enabler client (edge enabler client, EEC). The edge data network includes an edge application server (edge application server, EAS), an edge enabler server (edge enabler server, EES), and an edge configuration server (edge configuration server, ECS).

EDN: In general understanding, the edge data network corresponds to a data network, is a special local data network (local DN), includes an edge enabling function, may be identified by using a data network access identifier (data network access identifier, DNAI) and a data network name (data network name, DNN), and is a network logical concept. In another understanding, the edge data network is a peer concept of a central cloud, may be understood as a local data center (in a geographical location concept), may be identified by using a data network access identifier (data network access identifier, DNAI), and may include a plurality of local data networks.

EAS: An application deployed in the edge data network is referred to as an application instance. The application instance specifically refers to an instance (instance) of a server application program (for example, social media software, augmented reality (augmented reality, AR), or virtual reality (virtual reality, VR)) deployed and run in the EDN. One or more EASs may be deployed for one application in one or more EDNs. EASs deployed and running in different EDNs may be considered as different EASs of one application. The EASs may share one domain name, and may use one IP address or different IP addresses. The EAS may also be referred to as an edge application (server), an application instance, an edge application instance, an MEC application (server), an EAS function, or the like.

AC: The AC is a peer entity of the edge application on a UE side. The application client is used by an application user (user) to obtain an application service from an application server. The application client is a client program of an application on a terminal side. The application client may be connected to an application server on a cloud to obtain an application service, or may be connected to an EAS deployed and running in one or more EDNs to obtain the application service.

EES: The EES may provide some enabler capabilities for application instances deployed in the EDN, and support deployment of an application in an MEC. The EES may support registration of the edge application, authentication and authorization for the UE, provide IP address information of the application instance for the UE, and the like. The EES may further support obtaining an identifier and IP address information of the application instance, and further send the identifier and the IP address information of the application instance to an edge data network configuration server. The EES is deployed in the EDN. Generally, the EAS is registered with one EES, or information about one EAS is configured on one EES via a management system. The EES is referred to as an EES associated with the EAS. The EES controls/manages the EAS that is registered with/is configured in the EES.

EEC: The EEC is a peer entity of the EES on the UE side. The EEC is configured to register information about the EEC and information about the application client with the EES, perform security authentication and authorization, obtain IP address information of the EAS from the EES, and provide an edge computing enabler capability for the application client. For example, the EEC uses an EAS discovery service to return an IP address of the EAS to the application client.

ECS: The ECS is responsible for configuration of the EDN, for example, providing information about the EES to the UE. Alternatively, the edge configuration server may directly provide the information about the application instance to the UE, and obtain the information about the application instance by interacting with a DNS of the application. Further, the information about the application instance and information about an IP address are obtained from another functional entity and stored.

The application user signs a service agreement with an application provider, to provide services for the application user. The application user logs in to the application client AC on a user terminal, and performs communication over a connection between the application client AC and the edge application EAS. The edge enabler client EEC is a middleware layer, and is generally located in an operating system, or located between the application client and the operating system. The application client AC may obtain an edge enabler service from the edge enabler client EEC through an application programming interface (application programming interface, API).

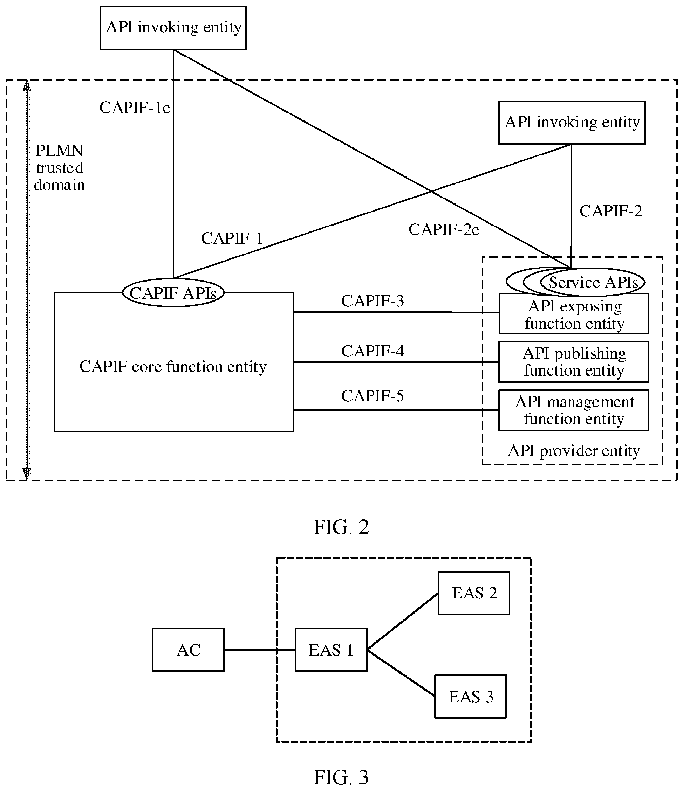

FIG. 2 shows an SA6 common API framework (common API framework, CAPIF) architecture. The SA6 CAPIF architecture includes an API invoking (API invoking) entity, a CAPIF core function (CAPIF core function, CCF) entity, and an API provider (API provider) entity. The API provider entity may include an API exposing function (API exposing function, AEF) entity, an API publishing function (API publishing function, APF) entity, and an API management function (API management function, AMF) entity.

The API invoking entity is also referred to as an API invoker, and is generally a third-party application that has signed a service agreement with a public land mobile network (public land mobile network, PLMN) operator, for example, an internet of things (internet of things, IoT) application or a vehicle to everything (vehicle to everything, V2X) application. These applications may run in a terminal device, or may run in a network device. In addition, the API invoking entity may alternatively be a device in the PLMN operator, for example, a mobility management (mobility management entity, MME) or a policy and charging rule function (policy and charging rule function, PCRF) entity in a 4G system, or may be a session management function (session management function, SMF) or policy control function (policy control function, PCF) entity in a 5G network. The API invoking entity and the PLMN operator may be in a same trusted domain (trusted domain). The API invoking entity supports the following functions: triggering rollout or rolloff of the API invoking entity; supporting authentication of the API invoking entity by providing an identifier and other information of the API invoking entity; supporting mutual authentication with the CAPIF; obtaining an authorization before accessing/visiting an API; discovering API information; and invoking an API.

The CCF has the following functions: performing authentication on the API invoking entity based on the identifier and other information of the API invoking entity; supporting mutual authentication with the API invoking entity; providing an authorization for the API invoking entity before the API invoking entity accesses/visits the API; supporting publishing, storage, and discovery functions of the API; performing API access or visit control based on a policy configured by the PLMN operator; storing API invoking log information and providing an API invoking log for another authorized entity; charging based on the API invoking log information; monitoring API invoking; a function of rolling out or rolling off the API invoking entity; storing CAPIF or API-related configuration policy information; supporting accessing or visiting an API log for implementing an audit function; and supporting a connection with another CCF to implement the publishing and discovery functions of the API.

AEF: The AEF is an API provider, and is also an entry for the API invoking entity to invoke the API. The AEF has the following functions: performing authentication on the API invoking entity based on the identifier and other information of the API invoking entity; confirming the authorization provided by the CCF; and synchronizing the API invoking log to the CCF.

APF: The APF publishes API information to the API provider (API provider), to support the API invoking entity in discovering the API information. The APF has the following function: publishing the API information of the API provider entity to the CCF.

AMF: The AMF performs API management for the API provider (API provider). The AMF has the following functions: supporting auditing of the API invoking log information received from the CCF; monitoring a related event reported by the CCF; configuring policy information of the API provider for the CCF; monitoring a status of the API; supporting rollout or rolloff of the API invoking entity; and supporting registration of an API provider domain function (API provider domain function) and registration of maintenance information.

FIG. 3 is a diagram of a multi-EAS scenario. In a deployment architecture of a current application server, a conventional single application server is divided into a plurality of application servers, to provide application services with high security and large capacity. In an SA6 MEC architecture, a multi-application server scenario may be referred to as a multi-EAS scenario, or may be referred to as a federated EAS scenario. For example, to provide a game application for a user or a client AC, a game application server may be divided into a plurality of EASs. Each EAS may provide a plurality of API services.

For example, an EAS 1 is an EAS that keeps a connection with the game client AC and may also be referred to as a primary EAS, and an EAS 2 and an EAS 3 are other EASs than the primary EAS in the plurality of EASs. The EAS 2 and the EAS 3 may provide a plurality of APIs. For example, the EAS 2 may provide a game rendering API 1, a content storage API 2, and the like, and the EAS 3 may provide a game acceleration API 3, a content analysis API 4, and the like. When a game is running, the AC may be connected to the EAS 1 and invokes the game rendering API 1 from the EAS 2 and the game acceleration API 3 from the EAS 3 through the EAS 1, to provide game experience for the user or the game client.

In addition, the current application server is in virtualization or cloud-based deployment. The EAS may be deployed as an instance of a virtual server. To effectively use a computing resource of an edge network, the EAS may be dynamically deployed or instantiated as required. Instantiation refers to a process of creating a virtual server instance or an EAS instance. The following provides two cases of triggering EAS instantiation.

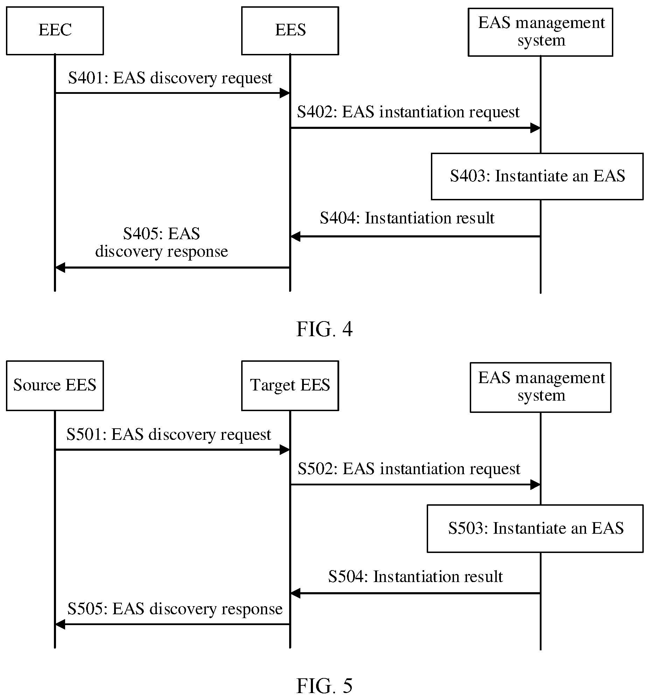

FIG. 4 is a diagram of an EAS instantiation procedure. Main steps are as follows.

S401: An EEC sends an EAS discovery request to an EES. The EAS discovery request may include a location of a UE and EAS discovery filter (EAS discovery filter) information, and the EAS discovery filter information includes AC profile (AC profile) information and the like. The EAS discovery filter information is shown in Table 1, and the AC profile information is shown in Table 2. A state O represents optional, and a state M represents mandatory.

S402: The EES determines whether the EES corresponds to the current location of the UE or whether there is an EAS that is needed by an AC application and that is available; and if the EES determines that the EES does not correspond to the current location of the UE or there is no EAS that is needed by the AC application and that is available, the EES sends an EAS instantiation request to an EAS management system.

S403: After receiving the EAS instantiation request, the EAS management system instantiates the EAS.

S404: The EAS management system sends an instantiation result to the EES. The instantiation result includes that the instantiation succeeds or the instantiation fails. If the instantiation result is that the instantiation succeeds, the instantiation result may further include information about an instantiated EAS.

S405: The EES sends an EAS discovery response to the EEC, where the EAS discovery response includes the information about the instantiated EAS.

FIG. 5 is a diagram of another EAS instantiation procedure. Main steps are as follows.

S501: A source EES sends an EAS discovery request to a target EES. The EAS discovery request may include a location of a UE and EAS discovery filter information, and the EAS discovery filter information further includes AC profile information and the like. The EAS discovery filter information is shown in Table 1, and the AC profile information is shown in Table 2. A state O represents optional, and a state M represents mandatory.

S502: The target EES determines whether the target EES corresponds to the current location of the UE or whether there is a target EAS that is needed by an AC application and that is available; and if the target EES determines that the target EES does not correspond to the current location of the UE or there is no target EAS that is needed by the AC application and that is available, the target EES sends an EAS instantiation request to an EAS management system.

S503: After receiving the EAS instantiation request, the EAS management system instantiates the target EAS.

S504: The EAS management system sends an instantiation result to the target EES. The instantiation result includes that the instantiation succeeds or the instantiation fails. If the instantiation result is that the instantiation succeeds, the instantiation result may further include information about an instantiated target EAS.

S505: The target EES sends an EAS discovery response to the source EES. The EAS discovery response includes the information about the instantiated target EAS.

**Table 1**

| Information element | Status | Description |
|---|---|---|
| Application client feature list | O | Describes an application client AC that needs a matched EAS |
| AC profile (NOTE 2) | M | Application client profile including a parameter for determining the matched EAS |
| Edge application server EAS feature list | O | Describes a feature of the needed edge application server EAS |
| EAS ID | O | Identifier of the needed EAS |
| EAS provider identifier | O | Identifier of a needed EAS provider |
| EAS Type | O | Category or type (for example, V2X) of the needed EAS |
| EAS schedule (EAS schedule) | O | Availability schedule (for example, a time window) required by the EAS |
| EAS geographical service area | O | Location (for example, a geographical area and a route) in which an EAS service is available |
| EAS topological service area | O | Topological area (for example, a cell ID and a TAI), where an EAS service in the cell is available |
| Service continuity support | O | Whether the service continuity support is needed |
| EAS status | O | Status (for example, enabled or disabled) of the EAS |
| Service permission level | O | Needed service permission level |
| Service feature | O | Needed service function, for example, a single-player and multi-player gaming service |

**Table 2**

| Information element | Status | Description |
|---|---|---|
| AC ID | M | Identifier of an application client |
| Application client type | O | Category or type (for example, V2X) of the application client |
| Preferred-ECSP list | O | When being used in a service providing request, the information element indicates, to an ECS, an ECSP that is preferred for the AC, and the ECS may use the information when selecting an EES |
| Application client schedule | O | Expected operation schedule (for example, a time window) of the application client |
| Expected geographical service area of the application client | O | An expected location of a UE in an application client operation schedule is deployed, where geographic information may indicate a geographic point, a polygon, a route, a signaling map, or a waypoint set |
| Service continuity support | O | Indicates whether an application needs the service continuity support |
| EAS list | O | List of EASs that provide a service for the application client and a service KPI needed by the application client |
| EAS ID | M | Identifier of an EAS |
| Application client service KPI | O | KPI needed by the AC to receive the service of the EAS |

In the foregoing EAS instantiation triggering process, a basis for the EES or the target EES to determine whether to send the EAS instantiation request to the EAS network management system is: an EAS discovery filter (an AC profile or an EAS feature). Availability of a service API needed by the EAS is not considered. Therefore, EAS instantiation is not supported in a multi-EAS scenario.

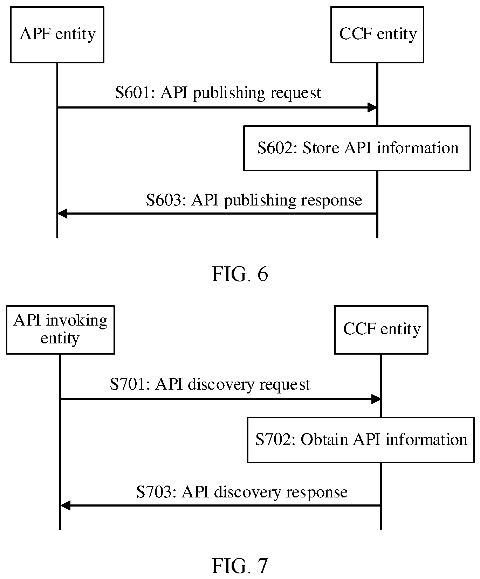

FIG. 6 is a diagram of an API publishing procedure. Main steps are as follows.

S601: An APF entity sends an API publishing request to a CCF entity. The API publishing request includes API content (for example, a name of an API, a type of the API, a service area, and interface information (for example, an IP address, a port number, and a URI)). If the API is shared with another CCF entity, the API publishing request includes shareable information.

S602: After the CCF entity receives the API publishing request, the CCF entity checks and authorizes the APF entity. If the authorization succeeds, the CCF entity stores API information provided by the APF entity.

S603: The CCF entity sends an API publishing response to the APF entity, where the API publishing response indicates an API publishing result, and the API publishing result includes that API publishing succeeds or API publishing fails.

FIG. 7 is a diagram of an API discovery procedure. Main steps are as follows.

S701: An API invoking entity sends an API discovery request to a CCF entity, where the API discovery request includes an identifier of the API invoking entity and query information (namely, an API discovery criterion like a type of an API or a name of the API).

S702: After the CCF entity receives the API discovery request, the CCF entity verifies and authorizes the identifier of the API invoking entity, and the CCF entity obtains API information from a stored API based on the query information. In addition, the CCF entity may alternatively perform API filtering and discovery based on an API discovery policy.

S703: The CCF entity sends an API discovery response to the API invoking entity, where the API discovery response includes discovered API list information, and the API list information may include the name, the type, a service area, interface information, or the like of the API.

In the foregoing API publishing or discovery process, it is assumed that an EAS corresponding to a needed API has been instantiated, and a case in which an API requested by the EAS is unavailable in a multi-EAS scenario is not considered, to be specific, EAS instantiation based on API availability is not supported, and an API cannot be rolled out or activated.

To resolve the foregoing technical problems, embodiments of this application provide the following solutions.

Network elements in embodiments of this application may include an API invoking entity, an API provider entity, a CCF entity, and a management system. Embodiments of this application may be applied to a CAPIF scenario, an MEC scenario, or another application scenario. In a multi-EAS scenario of the MEC, an API invoking entity may be a primary EAS, a CCF entity may be an EES, an API provider entity may be an EAS other than the primary EAS, and a network management system may be an EAS instantiation management system, a service management system, or the like.

The multi-EAS scenario in embodiments of this application may include an API invoking entity and a plurality of API provider entities (for example, a first API provider entity and a second API provider entity). The API invoking entity, the first API provider entity, and the second API provider entity may all be EASs, the API invoking entity is the primary EAS, the first API provider entity is an instantiated EAS, and the second API provider entity is an EAS that is instantiable but has not been instantiated. Alternatively, the first API provider entity is an instantiated EAS, and provides an API that has been rolled out or activated, and the second API provider entity is an instantiated EAS, but provides an API that can be rolled out or activated. The CCF entity supports API discovery and EAS instantiation triggering in the multi-EAS scenario.

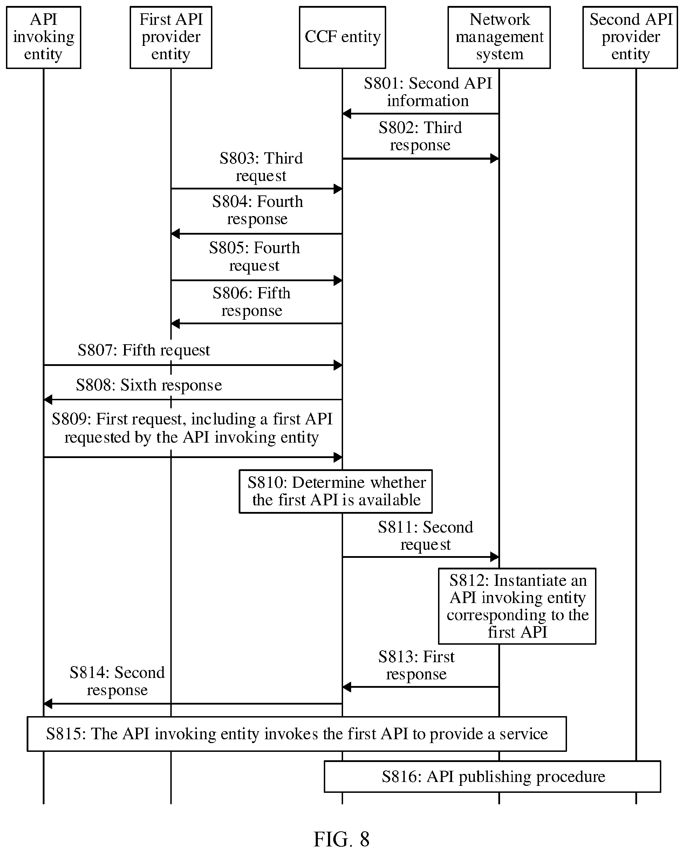

FIG. 8 is a schematic flowchart of a communication method according to an embodiment of this application. The communication method mainly includes the following steps.

S801: A network management system sends second API information to a CCF entity, where the second API information includes an API of an instantiable API provider entity and/or availability of the API of the instantiable API provider entity.

The second API information may further include information such as a name, a type, and a service area of the API of the instantiable API provider entity, but does not include interface information (for example, an IP address, a port number, and a URI) of the API of the instantiable API provider entity. Therefore, an API invoking entity cannot invoke the API of the instantiable API provider entity.

In this embodiment of this application, the instantiable API provider entity may be a second API provider entity.

Optionally, the second API information may further include indication information, and the indication information indicates that an API of an API provider entity is available after the API provider entity is instantiated.

S802: The CCF entity returns a third response to the network management system.

Specifically, when the CCF entity receives the second API information, the third response may be an acknowledgment response; or when the CCF entity does not receive the second API information, the third response may be a negative acknowledgment response.

S803: A first API provider entity sends a third request to the CCF entity.

The third request is used to request to register the first API provider entity with the CCF entity, to support the first API provider entity in becoming an authorized entity that uses a CAPIF function. The third request may be an API registration request.

S804: The CCF entity sends a fourth response to the first API provider entity.

Specifically, if the first API provider entity is successfully registered with the CCF entity, the fourth response is an acknowledgment response; or if the first API provider entity fails to be registered with the CCF entity, the fourth response is a negative acknowledgment response.

S805: The first API provider entity sends a fourth request to the CCF entity.

The fourth request is used to request the CCF entity to store, after checking and authorizing the first API provider entity, API information provided by the first API provider entity. The fourth request may be an API publishing request.

The fourth request may include the API information provided by the first API provider entity, and the API information includes a name of an API, a type of the API, a service area, and interface information (for example, an IP address, a port number, and a URI).

Optionally, the fourth request may further include shareable information. The shareable information indicates that another CCF entity can share the API information provided by the first API provider entity.

It should be noted that the first API provider entity is an instantiated API provider entity, and the instantiated API provider entity is published to the CCF entity. The API information provided by the first API provider entity includes the interface information of the API.

S806: The CCF entity sends a fifth response to the first API provider entity.

Specifically, after receiving the fourth request, the CCF entity checks and authorizes the first API provider entity. If the authorization succeeds, the fifth response is an acknowledgment response, and the CCF entity stores the API information provided by the first API provider entity. If the authorization fails, the fifth response is a negative acknowledgment response.

S807: The API invoking entity sends a fifth request to the CCF entity.

The fifth request is used to request to register the API invoking entity with the CCF entity, to support the API invoking entity in becoming the authorized entity that uses the CAPIF function. The fifth request may be an API registration request.

S808: The CCF entity sends a sixth response to the API invoking entity.

Specifically, if the API invoking entity is successfully registered with the CCF entity, the sixth response is an acknowledgment response; or if the API invoking entity fails to be registered with the CCF entity, the sixth response is a negative acknowledgment response.

S809: The API invoking entity sends a first request to the CCF entity.

The first request is used to request to query, from first API information pre-stored by the CCF entity, a first API requested by the API invoking entity. The first request may include the first API requested by the API invoking entity. The first request may be an API discovery request.

S810: The CCF entity queries, from the pre-stored first API information, whether the first API is available.

The first API information includes availability of a plurality of APIs, and the plurality of APIs include the first API. As shown in Table 3, Table 3 is a statistical table of the first API information pre-stored by the CCF entity. The statistics table includes a name, interface information, and availability information of an API. An API #1 and an API #2 are published by the instantiated first API provider entity to the CCF entity in S803 to S806. An API #3 and an API #4 are provided or configured by the instantiable second API provider entity for the CCF entity in S801 and S802. First API information corresponding to the instantiated first API provider entity includes interface information of an API. Therefore, the API of the first API provider entity is available. First API information corresponding to the instantiable second API provider entity does not include interface information of an API. Therefore, the API of the second API provider entity is unavailable, and the API is available after the second API provider entity is instantiated.

**Table 3**

| | Name of an API | Interface information of the API | Availability of the API |
|---|---|---|---|
| First API information | API #1 | Yes | Available |
| | API #2 | Yes | Available |
| | ... | ... | ... |
| | API #3 | None | Unavailable (available after instantiation is performed) |
| | API #4 | None | Unavailable (available after instantiation is performed) |

Specifically, if the CCF entity finds, from the pre-stored first API information, that the first API is available, the CCF entity sends the interface information of the first API to the API invoking entity, so that the API invoking entity invokes the first API via the interface information of the first API to provide a service. If the CCF entity finds, from the pre-stored first API information, that the first API is unavailable, the CCF entity determines to request to instantiate an API provider entity corresponding to the first API.

For example, first APIs requested by the API invoking entity are the API #1 and the API #4. It can be learned from Table 3 that the API #1 is an API of the instantiated first API provider entity and has interface information, and the API #1 is an available API. The API #4 is an API of the instantiable second API provider entity and does not have interface information, and the API #4 is an unavailable API. Therefore, the CCF entity determines to request to instantiate the second API provider entity.

Optionally, the first API information may further include an identifier of an API provider entity corresponding to each API. If the CCF entity finds, from the pre-stored first API information, that the first API is unavailable, and the API provider entity corresponding to the first API includes a plurality of API provider entities, the CCF entity may select a target API provider entity from the plurality of API provider entities.

S811: The CCF entity sends a second request to the network management system.

The second request is used to request to instantiate the API provider entity corresponding to the first API, and the second request may be an instantiation request.

The second request may include one or more of a name, a type, and a service area of the first API.

Optionally, the second request may include an identifier of the target API provider entity, and the second request is used to request to instantiate the target API provider entity.

S812: The network management system instantiates the API provider entity corresponding to the first API.

In this embodiment of this application, the API provider entity corresponding to the first API is the second API provider entity, and the interface information of the first API may be obtained by instantiating the second API provider entity.

Optionally, when the API provider entity corresponding to the first API includes the plurality of API provider entities, the network management system selects the target API provider entity from the plurality of API provider entities, and instantiates the target API provider entity.

For example, the second request sent by the CCF entity includes the API #4. If the network management system determines that the second API provider entity can provide the API #4, the network management system instantiates the second API provider entity. If the network management system determines that an API provider entity corresponding to the API #4 includes a plurality of API provider entities, for example, the second API provider entity and a third API provider entity, the network management system selects one of the second API provider entity and the third API provider entity for instantiation.

S813: The network management system sends a first response to the CCF entity.

Specifically, if the network management system successfully instantiates the API provider entity corresponding to the first API, the first response may be an acknowledgment response. The first response includes the interface information of the first API, and the interface information includes an IP address, a port number, a URI, and the like of the first API. Optionally, the first response may further include one or more of the name, the type, and the service area of the first API. If the network management system fails to instantiate the API provider entity corresponding to the first API, the first response may be a negative acknowledgment response.

The first response may be an instantiation response.

S814: The CCF entity sends a second response to the API invoking entity.

The second response may include the interface information of the first API. Optionally, the second response may further include one or more of the name, the type, and the service area of the first API. The second response may be an API discovery response.

S815: After receiving the second response, the API invoking entity obtains the interface information of the first API, and invokes the first API via the interface information of the first API to provide the service.

S816: The second API provider entity publishes, to the CCF entity, API information provided by the second API provider entity, to support a subsequent API invoking entity in discovering and invoking an instantiated API.

A specific implementation process is similar to S803 to S806, and details are not described herein again.

In this embodiment of this application, after receiving the first API requested by the API invoking entity, the CCF entity determines, based on availability of the first API, whether to request the network management system to instantiate the API provider entity corresponding to the first API. The network management system instantiates the API provider entity corresponding to the first API, so that the API invoking entity obtains the interface information of the first API, and invokes the first API via the interface information of the first API to provide the service. In this way, a corresponding API provider entity is instantiated based on a requirement, thereby avoiding a waste of resources of the API provider entity and improving resource utilization.

In the foregoing embodiment, the CCF entity determines whether to trigger a request to execute the instantiation process. In a next embodiment, the API invoking entity determines whether to trigger a request to execute the instantiation process.

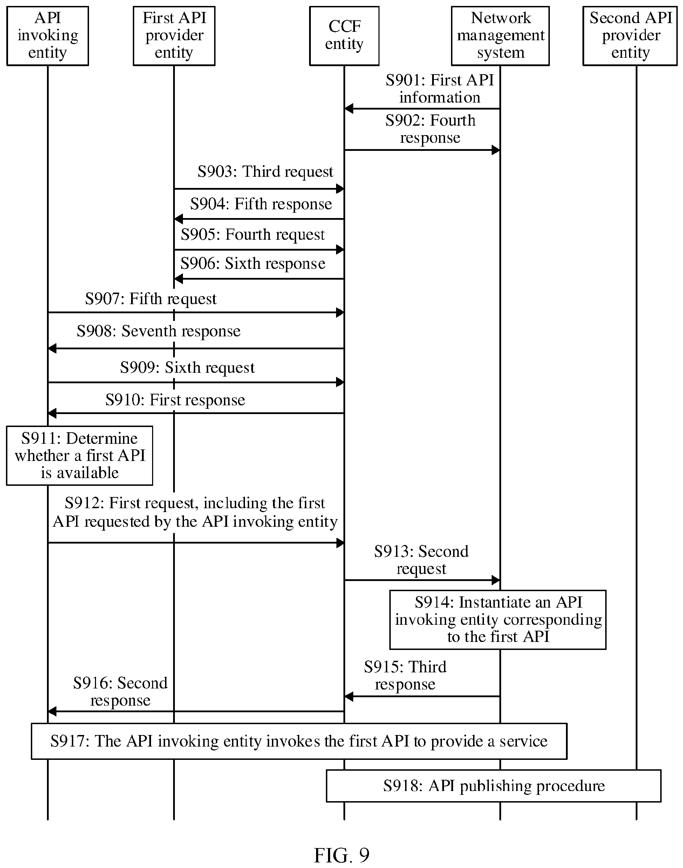

FIG. 9 is a schematic flowchart of another communication method according to an embodiment of this application. The communication method mainly includes the following steps.

S901 to S908 are the same as S801 to S808 in the foregoing embodiment. For a specific implementation, refer to S801 to S808. Details are not described herein again.

S909: An API invoking entity sends a sixth request to a CCF entity.

The sixth request is used to request to query, from first API information stored by the CCF entity, a first API requested by the API invoking entity. The sixth request may include the first API requested by the API invoking entity, and the sixth request may be an API discovery request.

S910: The CCF entity sends a first response to the API invoking entity.

The first response includes API information fed back by the CCF entity to the API invoking entity, and the API information may include an API of an instantiable API provider entity and/or availability of the API of the instantiable API provider entity. The API information may further include an API of an instantiated API provider entity and/or availability of the API of the instantiated API provider entity. The first response may be an API discovery response.

As shown in Table 4, Table 4 is a statistical table of the API information fed back by the CCF entity to the API invoking entity. For example, first APIs requested by the API invoking entity are an API #1 and an API #4. Therefore, the CCF entity feeds back API information of the API #1 and API information of the API #4. The API #1 is published by an instantiated first API provider entity to the CCF entity in S903 to S906, and the API #4 is provided or configured by an instantiable second API provider entity for the CCF entity in S901 and S902. First API information corresponding to the instantiated first API provider entity includes interface information of an API. Therefore, the API of the first API provider entity is available. First API information corresponding to the instantiable second API provider entity does not include interface information of an API. Therefore, the API of the second API provider entity is unavailable, and the API is available after the second API provider entity is instantiated.

**Table 4**

| | Name of an API | Interface information | Availability of the API |
|---|---|---|---|
| API information fed back by a CCF entity to an API invoking entity | API #1 | Yes | Available |
| | API #4 | None | Unavailable (available after instantiation is performed) |

Optionally, the first response may further include indication information, and the indication information indicates that the API of the instantiable API provider entity is available after the API provider entity is instantiated.

S911: The API invoking entity determines, based on the API of the instantiable API provider entity and/or the availability of the API of the instantiable API provider entity, whether the first API requested by the API invoking entity is available.

Specifically, if the API invoking entity determines that the first API requested by the API invoking entity is available, the API invoking entity may invoke the first API via the interface information of the first API to provide a service. If the API invoking entity determines that the first API is unavailable, the API invoking entity determines to request to instantiate an API provider entity corresponding to the first API.

For example, the first APIs requested by the API invoking entity are the API #1 and the API #4. It can be learned from Table 4 that the API #1 is an API of the instantiated first API provider entity and has interface information, and the API #1 is an available API. The API #4 is an API of the instantiable second API provider entity and does not have interface information, and the API #4 is an unavailable API. Therefore, the CCF entity determines to request to instantiate the second API provider entity corresponding to the API #4.

S912: The API invoking entity sends a first request to the CCF entity.

The first request indicates the available first API obtained by instantiating the API provider entity corresponding to the first API. The first request may be an API invoking notification request message.

The first request may include one or more of a name, a type, and a service area of the first API.

S913: The CCF entity sends a second request to a network management system.

The second request is used to request to instantiate the API provider entity corresponding to the first API, and the second request may be an instantiation request.

Optionally, the CCF entity pre-stores an identifier of the API provider entity corresponding to the first API. When the API provider entity corresponding to the first API includes a plurality of API provider entities, the CCF entity may select a target API provider entity from the plurality of API provider entities. The second request may include an identifier of the target API provider entity, and the second request is used to request to instantiate the target API provider entity.

The second request may include one or more of the name, the type, and the service area of the first API.

S914: The network management system instantiates the API provider entity corresponding to the first API.

In this embodiment of this application, the API provider entity corresponding to the first API is the second API provider entity, and the interface information of the first API may be obtained by instantiating the second API provider entity.

Optionally, when the API provider entity corresponding to the first API includes the plurality of API provider entities, the network management system selects the target API provider entity from the plurality of API provider entities, and instantiates the target API provider entity.

For example, the second request sent by the CCF entity includes the API #4. If the network management system determines that the second API provider entity can provide the API #4, the network management system instantiates the second API provider entity. If the network management system determines that an API provider entity corresponding to the API #4 includes a plurality of API provider entities, for example, the second API provider entity and a third API provider entity, the network management system selects one of the second API provider entity and the third API provider entity for instantiation.

S915: The network management system sends a third response to the CCF entity.

Specifically, if the network management system successfully instantiates the API provider entity corresponding to the first API, the third response may be an acknowledgment response. The third response includes the interface information of the first API, and the interface information includes an IP address, a port number, a URI, and the like of the first API. Optionally, the third response may further include one or more of the name, the type, and the service area of the first API. If the network management system fails to instantiate the API provider entity corresponding to the first API, the third response may be a negative acknowledgment response.

The third response may be an instantiation response.

S916: The CCF entity sends a second response to the API invoking entity.

The second response may include the interface information of the first API. Optionally, the second response may further include one or more of the name, the type, and the service area of the first API. The second response may be an API discovery response.

S917: After receiving the second response, the API invoking entity obtains the interface information of the first API, and invokes the first API via the interface information of the first API to provide the service.

S918: The second API provider entity publishes, to the CCF entity, API information provided by the second API provider entity, to support a subsequent API invoking entity in discovering and invoking an instantiated API.

In this embodiment of this application, after receiving the API of the instantiable API provider entity and/or the availability of the API of the instantiable API provider entity, the API invoking entity determines whether to request to instantiate the API provider entity corresponding to the first API. The network management system instantiates the API provider entity corresponding to the first API, so that the API invoking entity obtains the interface information of the first API, and invokes the first API via the interface information of the first API to provide the service. In this way, a corresponding API provider entity is instantiated based on a requirement, thereby avoiding a waste of resources of the API provider entity and improving resource utilization.

The foregoing embodiment is the API provider entity instantiation procedure in which the API invoking entity and the API provider entity are controlled by a single CCF entity. A next embodiment is an API provider entity instantiation procedure in which the API invoking entity and the API provider entity are controlled by a plurality of CCF entities. In addition, the CCF entity determines whether to trigger a request to execute the instantiation process.

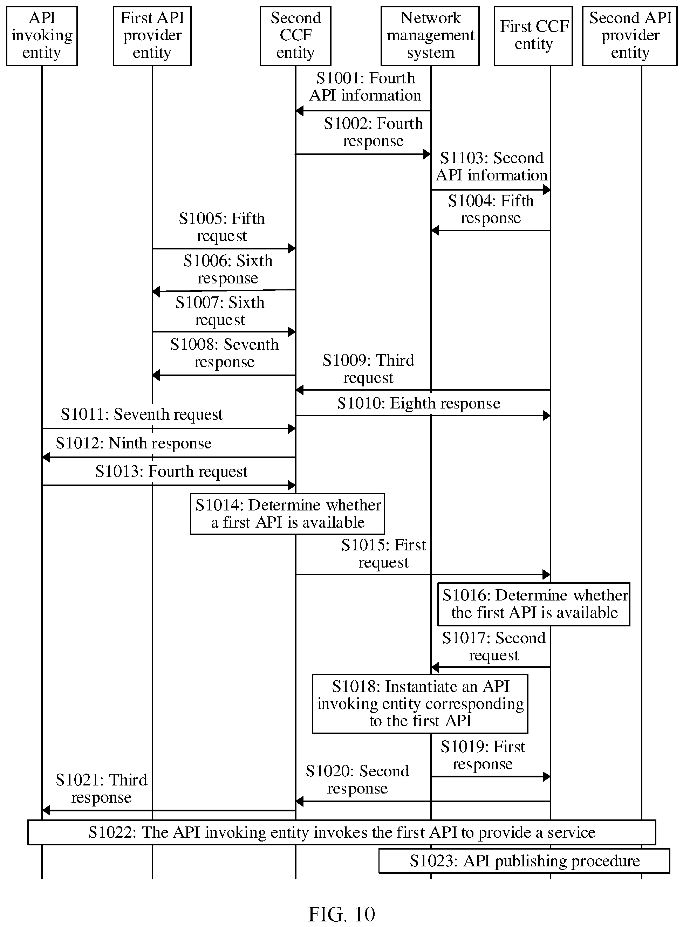

FIG. 10 is a schematic flowchart of still another communication method according to an embodiment of this application. The communication method mainly includes the following steps.

S1001: A network management system sends fourth API information to a second CCF entity. The fourth API information includes an API of an instantiable API provider entity within a control range of the second CCF entity and/or availability of the API of the instantiable API provider entity within the control range of the second CCF entity.

The fourth API information may further include information such as a name, a type, and a service area of the API of the instantiable API provider entity within the control range of the second CCF entity, but does not include interface information (for example, an IP address, a port number, and a URI) of the API of the instantiable API provider entity. Therefore, an API invoking entity cannot invoke the API of the instantiable API provider entity.

Optionally, the fourth API information may further include indication information, and the indication information indicates that an API of an API provider entity within the control range of the second CCF entity is available after the API provider entity is instantiated.

S1002: The second CCF entity returns a fourth response to the network management system.

Specifically, when the second CCF entity receives the fourth API information, the fourth response may be an acknowledgment response; or when the second CCF entity does not receive the fourth API information, the fourth response may be a negative acknowledgment response.

S1003: The network management system sends second API information to a first CCF entity, where the second API information includes an API of an instantiable API provider entity within a control range of the first CCF entity and/or availability of the API of the instantiable API provider entity within the control range of the first CCF entity.

The second API information may further include information such as a name, a type, and a service area of the API of the instantiable API provider entity within the control range of the first CCF entity, but does not include interface information (for example, an IP address, a port number, and a URI) of the API of the instantiable API provider entity. Therefore, the API invoking entity cannot invoke the API of the instantiable API provider entity.

Optionally, the second API information may further include indication information, and the indication information indicates that an API of an API provider entity within the control range of the first CCF entity is available after the API provider entity is instantiated.

S1004: The first CCF entity returns a fifth response to the network management system.

Specifically, when the first CCF entity receives the second API information, the fifth response may be an acknowledgment response; or when the first CCF entity does not receive the second API information, the fifth response may be a negative acknowledgment response.

S1005 to S1008 are the same as S803 to S806. For a specific implementation, refer to S803 to S806. Details are not described herein again.

S1009: The first CCF entity sends a third request to the second CCF entity. The third request includes an identifier of the first CCF, and the API of the instantiable API provider entity within the control range of the first CCF entity and/or the availability of the API of the instantiable API provider entity within the control range of the first CCF entity.

Optionally, the third request may further include indication information, and the indication information indicates that the API of the API provider entity within the control range of the first CCF entity is available after the API provider entity is instantiated.

The third request may be an API publishing request.

S1010: The second CCF entity sends an eighth response to the first CCF entity.

Specifically, after receiving the third request, the second CCF entity checks and authorizes the first CCF entity. If the authorization succeeds, the second CCF entity stores the identifier of the first CCF, and the API of the instantiable API provider entity within the control range of the first CCF entity and/or the availability of the API of the instantiable API provider entity within the control range of the first CCF entity, and the eighth response returned to the first CCF entity is an acknowledgment response. If the authorization succeeds, the eighth response returned to the first CCF entity is a negative acknowledgment response.

S1011 and S1012 are the same as S807 and S808. For a specific implementation, refer to S807 and S808. Details are not described herein again.

S1013: The API invoking entity sends a fourth request to the second CCF entity, where the fourth request includes a first API requested by the API invoking entity.

The fourth request may be an API discovery request.

S1014: The second CCF entity queries, from pre-stored third API information, whether the first API is available. The third API information includes availability of APIs of API provider entities within control ranges of a plurality of CCF entities, and the plurality of CCF entities include the first CCF entity and the second CCF entity.

It should be noted that, after S1001 to S1004 and S1009 and S1010, the third API information stored by the second CCF entity includes the identifier of the first CCF, and the API of the instantiable API provider entity within the control range of the first CCF entity and/or the availability of the API of the instantiable API provider entity within the control range of the first CCF entity. The third API information may further include an identifier of the second CCF entity, and the API of the instantiable API provider entity within the control range of the second CCF entity and/or the availability of the API of the instantiable API provider entity within the control range of the second CCF entity. The third API information may alternatively include an identifier of the second CCF entity, and an API of an instantiated API provider entity within the control range of the second CCF entity and/or availability of the API of the instantiated API provider entity within the control range of the second CCF entity.

For example, as shown in Table 5, Table 5 is a statistical table of the third API information stored by the second CCF entity. The third API information stored by the second CCF entity includes names, interface information, and availability of an API #1 and an API #2 within a control range of a CCF #1, names, interface information, and availability of an API #3 and an API #4 within a control range of a CCF #2, and names, interface information, and availability of the API #4 and an API #5 within a control range of a CCF #3. The API #3 and the API #4 within the control range of the CCF #2 do not have interface information. Therefore, the API #3 and the API #4 within the control range of the CCF #2 are unavailable, and API provider entities within the control range of the CCF #2 need to be instantiated. The API #4 and the API #5 within the control range of the CCF #3 do not have interface information. Therefore, the API #4 and the API #5 within the control range of the CCF #3 are unavailable, and API provider entities within the control range of the CCF #3 need to be instantiated.

**Table 5**

| | Name of an API | Source of the API | Interface information | Availability of the API |
|---|---|---|---|---|
| | API #1 | CCF #1 | Yes | Available |
| | API #2 | CCF #1 | Yes | Available |
| | API #3 | CCF #2 | None | Unavailable (available after instantiation is performed) |
| Third API information stored by a second CCF entity | API #4 | CCF #2 | None | Unavailable (available after instantiation is performed) |
| | ... | ... | ... | ... |
| | API #4 | CCF #3 | None | Unavailable (available after instantiation is performed) |
| | API #5 | CCF #3 | None | Unavailable (available after instantiation is performed) |

Specifically, if the first API is unavailable, the second CCF entity selects the first CCF entity corresponding to the first API from the plurality of CCF entities. If the first API is available, the second CCF entity returns interface information of the first API to the API invoking entity, so that the API invoking entity invokes the first API via the interface information of the first API to provide a service.

For example, first APIs requested by the API invoking entity are the API #1 and the API #4. It can be learned from Table 5 that the API #1 may be provided by an API provider entity within the control range of the CCF #1 and has interface information, and the API #1 is available. The API #4 may be provided by an API provider entity within the control range of the CCF #2 and an API provider entity within the control range of the CCF #3 and does not have interface information, and the API #4 is unavailable. One CCF entity needs to be selected from the CCF #2 and the CCF #3, to avoid a waste of resources caused by instantiating the API provider entities within the control ranges of the plurality of CCF entities.

S1015: The second CCF entity sends a first request to the first CCF entity.

The first request includes the first API requested by the API invoking entity. The first request may further include an identifier of the first CCF entity. The first request may be an API discovery request.

S1016 to S1019 are the same as S810 to S813 in the embodiment shown in FIG. 8. For a specific implementation, refer to S810 to S813. Details are not described herein again.

S1020: The first CCF entity sends a second response to the second CCF entity.

The second response may include the interface information of the first API. The second response may further include one or more of a name, a type, and a service area of the first API. The second response may be an API discovery response.

S1021: The second CCF entity sends a third response to the API invoking entity.

The third response may include the interface information of the first API. The second response may further include one or more of the name, the type, and the service area of the first API. The third response may be an API discovery response.

S1022 and S1023 are the same as S815 and S816 in the embodiment shown in FIG. 8. For a specific implementation, refer to S815 and S816. Details are not described herein again.

In this embodiment of this application, the second CCF entity selects a CCF entity based on the availability of the APIs of the API provider entities within the control ranges of the plurality of CCF entities. When an API discovery procedure is executed across CCF entities, the first CCF entity determines, based on availability of a plurality of APIs within the control range of the first CCF entity, whether to request to instantiate an API provider entity corresponding to the first API. The network management system instantiates the API provider entity corresponding to the first API, so that the API invoking entity obtains the interface information of the first API. A corresponding API provider entity is instantiated based on a requirement, thereby avoiding a waste of resources of the API provider entity and improving resource utilization.

In the foregoing embodiment, the CCF entity determines whether to trigger a request to execute the instantiation process. In a next embodiment, the API invoking entity determines whether to trigger a request to execute the instantiation process. In addition, the next embodiment is the API provider entity instantiation process in which the API invoking entity and the API provider entity are controlled by the plurality of CCF entities.

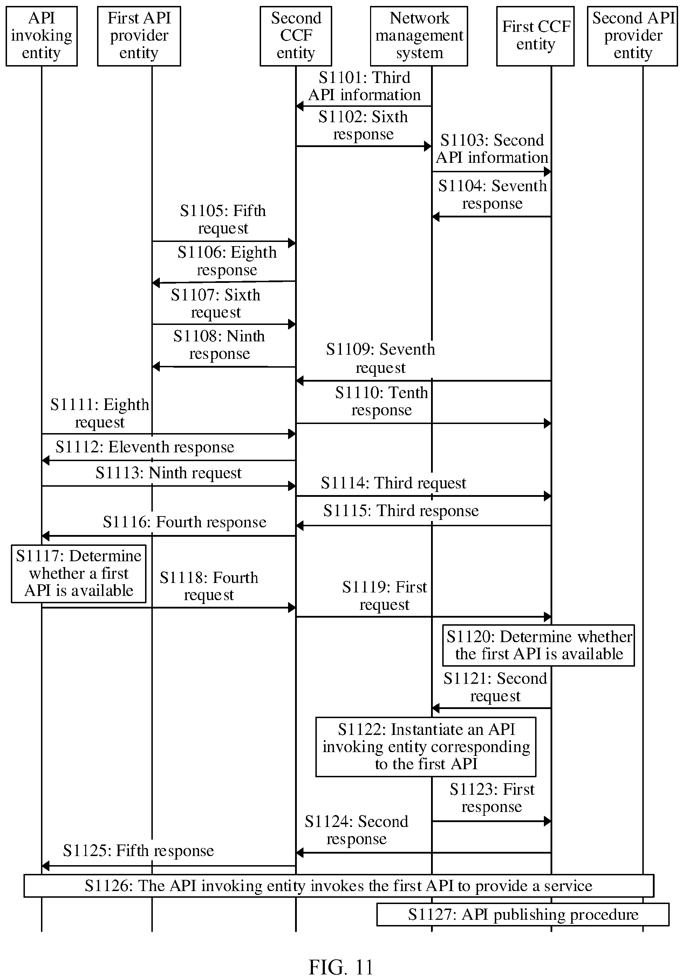

FIG. 11 is a schematic flowchart of still another communication method according to an embodiment of this application. The communication method mainly includes the following steps.

S1101 to S1112 are the same as S1001 to S1012 in the embodiment shown in FIG. 10. For a specific implementation, refer to S1001 to S1012. Details are not described herein again.

S1113: An API invoking entity sends a ninth request to a second CCF entity.

The ninth request is used to request to query a first API requested by the API invoking entity. The ninth request may include the first API requested by the API invoking entity, and the ninth request may be an API discovery request.

S1114: The second CCF entity sends a third request to a first CCF entity.

The third request is used to request to query the first API requested by the API invoking entity. The third request includes the first API requested by the API invoking entity, and the third request may further include an identifier of the first CCF entity. The third request may be an API discovery request.

S1115: The first CCF entity sends a third response to the second CCF entity.

The third response includes an identifier of the first CCF, and an API of an instantiable API provider entity within a control range of the first CCF entity and/or availability of the API of the instantiable API provider entity within the control range of the first CCF entity. The third response may be an API discovery response.

Optionally, the third response may further include indication information, and the indication information indicates that the API is available after the instantiable API provider entity within the control range of the first CCF entity is instantiated.

S1116: The second CCF entity sends a fourth response to the API invoking entity.

The fourth response includes availability of APIs of API provider entities within control ranges of a plurality of CCF entities, and the plurality of CCF entities include the first CCF entity and the second CCF entity. Further, the fourth response may include APIs of instantiable API provider entities and/or availability of the APIs of the instantiable API provider entities within the control ranges of the plurality of CCF entities. The fourth response may further include APIs of instantiated API provider entities and/or availability of the APIs of the instantiated API provider entities within the control ranges of the plurality of CCF entities. The fourth response may be an API discovery response.

Optionally, the fourth response may further include indication information, and the indication information indicates that an API is available after an instantiable API provider entity within the control ranges of the plurality of CCF entities is instantiated.

As shown in Table 6, Table 6 is a statistical table of API information fed back by the second CCF entity to the API invoking entity. For example, first APIs requested by the API invoking entity are an API #1 and an API #4. Therefore, the second CCF entity feeds back API information of the API #1 and API information of the API #4. The API #1 is provided by an instantiated API provider entity within a control range of a CCF #1, and the API #4 is provided by instantiable API provider entities within a control range of a CCF #2 and a control range of a CCF #3. The API of the instantiated API provider entity within the control range of the CCF#1 has interface information, and the API #1 is available. The API of the instantiable API provider entities within the control range of the CCF #2 and the control range of the CCF #3 does not have interface information, and the API #4 is unavailable. The instantiable API provider entities within the control range of the CCF #2 and the control range of the CCF #3 need to be instantiated.

**Table 6**

| | Name of an API | Source of the API | Interface information | Availability of the API |
|---|---|---|---|---|
| API information fed back by a second CCF entity to an API invoking entity | API #1 | CCF #1 | Yes | Available |
| | API #4 | CCF #2 | None | Unavailable (available after instantiation is performed) |
| | API #4 | CCF #3 | None | Unavailable (available after instantiation is performed) |

S1117: The API invoking entity determines, based on the availability of the APIs of the API provider entities within the control ranges of the plurality of CCF entities, whether the first API requested by the API invoking entity is available.

Specifically, if the first API is available, the API invoking entity may invoke the first API via the interface information of the first API to provide a service. If the first API is unavailable, the API invoking entity selects the first CCF entity corresponding to the first API from the plurality of CCF entities.

For example, the first APIs requested by the API invoking entity are the API #1 and the API #4. It can be learned from Table 6 that the API #1 is an API of the instantiated API provider entity within the control range of the CCF #1 and has the interface information, and the API #1 is an available API. The API #4 is an API of the instantiable API provider entities within the control range of the CCF #2 and the control range of the CCF #3 and does not have the interface information, and the API#4 is an unavailable API. Therefore, the CCF entity selects one CCF #2 from the CCF #2 and the CCF #3, and requests to instantiate the API provider entity corresponding to the API #4 within the control range of the CCF #2.

S1118: The API invoking entity sends a fourth request to the second CCF entity.

The fourth request includes an identifier of the first CCF entity and the first API, and the identifier of the first CCF entity and the first API are used to request to instantiate an API provider entity corresponding to the first API within the control range of the first CCF entity. The fourth request may be an API invoking notification request.

Optionally, the fourth request includes one or more of a name, a type, and a service area of the first API.

In this embodiment of this application, the API provider entity corresponding to the first API within the control range of the first CCF entity is a second API provider entity.

Specifically, after receiving the fourth request, the second CCF entity may determine, based on the identifier of the first CCF entity, that the first API is provided by the API provider entity within the control range of the first CCF entity, and therefore determine to request to instantiate the API provider entity corresponding to the first API within the control range of the first CCF entity.

S1119: The second CCF entity sends a first request to the first CCF entity.

The first request is used to request to instantiate the API provider entity corresponding to the first API within the control range of the first CCF entity. The first request includes the first API requested by the API invoking entity.

Optionally, the first request may include one or more of the name, the type, and the service area of the first API. The first request may be an API invoking notification request.

S1120 to S1127 are the same as S1016 to S1023 in the embodiment shown in FIG. 10. For a specific implementation, refer to S1016 to S1023. Details are not described herein again.

In this embodiment of this application, the API invoking entity selects a CCF entity based on the availability of the APIs of the API provider entities within the control ranges of the plurality of CCF entities. When an API discovery procedure is executed across CCF entities, the first CCF entity determines, based on availability of a plurality of APIs within the control range of the first CCF entity, whether to request to instantiate the API provider entity corresponding to the first API. The network management system instantiates the API provider entity corresponding to the first API, so that the API invoking entity obtains the interface information of the first API. A corresponding API provider entity is instantiated based on a requirement, thereby avoiding a waste of resources of the API provider entity and improving resource utilization.

In the foregoing embodiment, if the first API requested by the API invoking entity is an API of an instantiable API provider entity, after the network management system instantiates the instantiable API provider entity, available interface information may be provided through the instantiated API provider entity. In the following embodiment, if the first API requested by the API invoking entity is an API that can be rolled out or activated and that is of an instantiated API provider entity, the instantiated API provider entity may provide available interface information after rolling out or activating the first API.

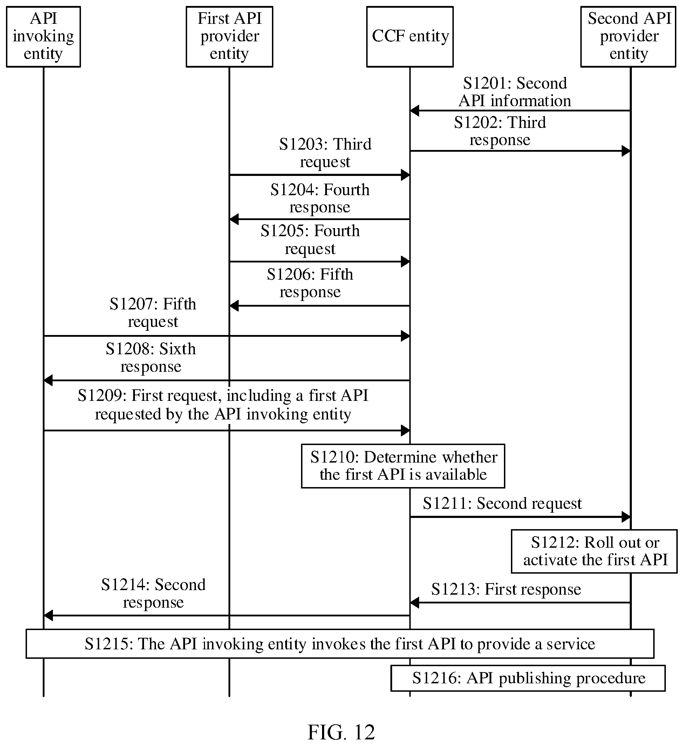

FIG. 12 is a schematic flowchart of still another communication method according to an embodiment of this application. The communication method mainly includes the following steps.

S1201: A second API provider entity sends second API information to a CCF entity, where the second API information includes an API that can be rolled out or activated and/or availability of the API that can be rolled out or activated.

The second API information may further include information such as a name, a type, and a service area of the API that can be rolled out or activated, but does not include interface information (for example, an IP address, a port number, and a URI) of the API that can be rolled out or activated. Therefore, an API invoking entity cannot invoke the API that can be rolled out or activated.

Optionally, the second API information may further include indication information, and the indication information indicates that the API that can be rolled out or activated is available after the API that can be rolled out or activated is rolled out or activated.

The second API entity may be an instantiated API provider entity.

S1202: The CCF entity returns a third response to the second API provider entity.

Specifically, when the CCF entity receives the second API information, the third response may be an acknowledgment response; or when the CCF entity does not receive the second API information, the third response may be a negative acknowledgment response.

S1203: A first API provider entity sends a third request to the CCF entity.

The third request is used to request to register the first API provider entity with the CCF entity, to support the first API provider entity in becoming an authorized entity that uses a CAPIF function. The third request may be an API registration request.

The first API provider entity may be an instantiated API provider entity.

S1204: The CCF entity sends a fourth response to the first API provider entity.

Specifically, if the first API provider entity is successfully registered with the CCF entity, the fourth response is an acknowledgment response; or if the first API provider entity fails to be registered with the CCF entity, the fourth response is a negative acknowledgment response.

S1205: The first API provider entity sends a fourth request to the CCF entity.

The fourth request is used to request the CCF entity to store, after checking and authorizing the first API provider entity, API information provided by the first API provider entity. The fourth request may be an API publishing request.

The fourth request may include the API information provided by the first API provider entity, and the API information includes a name of an API, a type of the API, a service area, and interface information (for example, an IP address, a port number, and a URI).

Optionally, the fourth request may further include shareable information. The shareable information indicates that another CCF entity can share the API information provided by the first API provider entity.

S1206: The CCF entity sends a fifth response to the first API provider entity.

Specifically, after receiving the fourth request, the CCF entity checks and authorizes the first API provider entity. If the authorization succeeds, the fifth response is an acknowledgment response, and the CCF entity stores the API information provided by the first API provider entity. If the authorization fails, the fifth response is a negative acknowledgment response.

S1207: The API invoking entity sends a fifth request to the CCF entity.

The fifth request is used to request to register the API invoking entity with the CCF entity, to support the API invoking entity in becoming an authorized entity that uses the CAPIF function. The fifth request may be an API registration request.

S1208: The CCF entity sends a sixth response to the API invoking entity.

Specifically, if the API invoking entity is successfully registered with the CCF entity, the sixth response is an acknowledgment response; or if the API invoking entity fails to be registered with the CCF entity, the sixth response is a negative acknowledgment response.

S1209: The API invoking entity sends a first request to the CCF entity.

The first request is used to request to query, from first API information pre-stored by the CCF entity, a first API requested by the API invoking entity. The first request may include the first API requested by the API invoking entity. The first request may be an API discovery request.

S1210: The CCF entity queries, from the pre-stored first API information, whether the first API is available.

The first API information includes availability of a plurality of APIs, and the plurality of APIs include the first API. As shown in Table 7, Table 7 is a statistical table of the first API information pre-stored by the CCF entity. The statistics table includes a name, interface information, and availability information of an API. An API #1 and an API #2 are published by the first API provider entity to the CCF entity in S 1203 to S1206, and an API #3 and an API #4 are provided or configured by the second API provider entity for the CCF entity in S1201 and S1202. First API information corresponding to the first API provider entity includes interface information of an API. Therefore, the API of the first API provider entity is available. First API information corresponding to the second API provider entity does not include interface information of an API. Therefore, the API of the second API provider entity is unavailable, and the API #3 and the API #4 are available after the API #3 and the API #4 are rolled out or activated.

**Table 7**

| | Name of an API | Interface information of the API | Availability of the API |
|---|---|---|---|
| First API information | API #1 | Yes | Available |
| | API #2 | Yes | Available |
| | ... | ... | ... |
| | API #3 | None | Unavailable (can be rolled out or activated) |
| | API #4 | None | Unavailable (can be rolled out or activated) |

Specifically, if the CCF entity finds, from the pre-stored first API information, that the first API is available, the CCF entity sends interface information of the first API to the API invoking entity, so that the API invoking entity invokes the first API via the interface information of the first API to provide a service. If the CCF entity finds, from the pre-stored first API information, that the first API is unavailable, the CCF entity determines to request to roll out or activate the first API.

For example, first APIs requested by the API invoking entity are the API #1 and the API #4. It can be learned from Table 7 that the API #1 is an API of the first API provider entity and has interface information, and the API #1 is an available API. The API #4 is an API of the second API provider entity and does not have interface information, and the API #4 is an unavailable API. Therefore, the CCF entity determines to request to roll out or activate the API #4.

S1211: The CCF entity sends a second request to the second API provider entity.

The second request is used to request to roll out or activate the first API, and the second request may be a rollout request or an activation request.

The second request may include one or more of a name, a type, and a service area of the first API.

S1212: The second API provider entity rolls out or activates the first API. The interface information of the first API may be obtained by rolling out or activating the first API.

S1213: The second API provider entity sends a first response to the CCF entity.

Specifically, if the second API provider entity successfully rolls out or activates the first API, the first response may be an acknowledgment response. The first response includes the interface information of the first API, and the interface information includes an IP address, a port number, a URI, and the like of the first API. Optionally, the first response may further include one or more of the name, the type, and the service area of the first API. If the second API provider entity fails to roll out or activate the first API, the first response may be a negative acknowledgment response.

The first response may be a rollout response or an activation response.

S1214: The CCF entity sends a second response to the API invoking entity.

The second response may include the interface information of the first API. Optionally, the second response may further include one or more of the name, the type, and the service area of the first API. The second response may be an API discovery response.

S1215: After receiving the second response, the API invoking entity obtains the interface information of the first API, and invokes the first API via the interface information of the first API to provide a service.

S1216: The second API provider entity publishes, to the CCF entity, API information provided by the second API provider entity, to support a subsequent API invoking entity in discovering and invoking an API that has been rolled out or activated.

A specific implementation process is similar to S1203 to S1206, and details are not described herein again.

In this embodiment of this application, after receiving the first API requested by the API invoking entity, the CCF entity determines, based on availability of the first API, whether to request the second API provider entity to roll out or activate the first API. The second API provider entity rolls out or activates the first API, so that the API invoking entity obtains the interface information of the first API, and invokes the first API via the interface information of the first API to provide a service. A corresponding API is rolled out or activated based on a requirement, thereby avoiding a waste of resources of an API provider entity and improving resource utilization.

In the foregoing embodiment, the CCF entity determines whether to trigger a request to execute the rollout process or the activation process. In a next embodiment, the API invoking entity determines whether to trigger a request to execute the rollout process or the activation process.

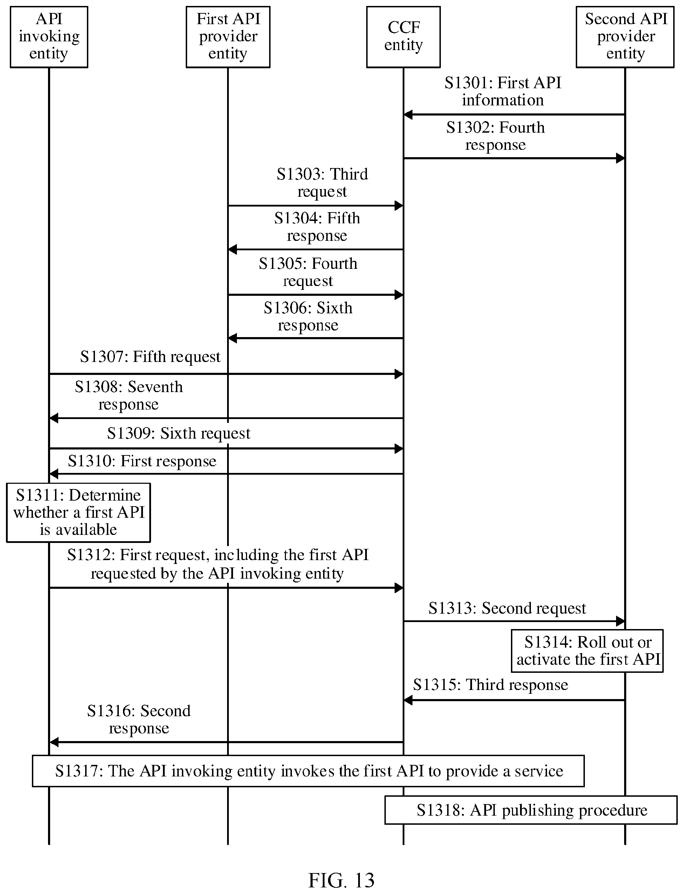

FIG. 13 is a schematic flowchart of still another communication method according to an embodiment of this application. The communication method mainly includes the following steps.

S1301 to S1308 are the same as S1201 to S1208 in the foregoing embodiment. For a specific implementation, refer to S 1201 to S 1208. Details are not described herein again.

S1309: An API invoking entity sends a sixth request to a CCF entity.

The sixth request is used to request to query, from first API information stored by the CCF entity, a first API requested by the API invoking entity. The first request may include the first API requested by the API invoking entity, and the first request may be an API discovery request.

S1310: The CCF entity sends a first response to the API invoking entity.

The first response includes API information fed back by the CCF entity to the API invoking entity, and the API information may include an API that can be rolled out or activated and/or availability of the API that can be rolled out or activated. The API information may further include an API that has been rolled out or activated and/or availability of the API that has been rolled out or activated. The first response may be an API discovery response.

As shown in Table 8, Table 8 is a statistical table of the API information fed back by the CCF entity to the API invoking entity. For example, first APIs requested by the API invoking entity are an API #1 and an API #4. Therefore, the CCF entity feeds back API information of the API #1 and API information of the API #4. The API #1 is an API that has been rolled out or activated and that is published by a first API provider entity to the CCF entity in S1303 to S1306, and the API #4 is an API that can be rolled out or activated and that is provided or configured by a second API provider entity for the CCF entity in S1301 and S1302. API information corresponding to the first API provider entity includes interface information of an API. Therefore, the API #1 is available. API information corresponding to the second API provider entity does not include interface information of an API. Therefore, the API #4 is unavailable, and the API #4 needs to be rolled out or activated.

**Table 8**

| | Name of an API | Interface information | Availability of the API |
|---|---|---|---|
| API information fed back by a CCF entity to an API invoking entity | API #1 | Yes | Available |
| | API #4 | None | Unavailable (can be rolled out or activated) |

Optionally, the first response may further include indication information, and the indication information indicates that the API that can be rolled out or activated is available after the API that can be rolled out or activated is rolled out or activated.

S1311: The API invoking entity determines, based on the API that can be rolled out or activated and/or the availability of the API that can be rolled out or activated, whether the first API requested by the API invoking entity is available.

Specifically, if the API invoking entity determines that the first API requested by the API invoking entity is available, the API invoking entity may invoke the first API via interface information of the first API to provide a service. If the API invoking entity determines that the first API is unavailable, the API invoking entity determines to request to roll out or activate the first API.

For example, the first APIs requested by the API invoking entity are the API #1 and the API #4. It can be learned from Table 8 that the API #1 is an API of the first API provider entity and has interface information, and the API #1 is an available API. The API #4 is an API of the second API provider entity and does not have interface information, and the API #4 is an unavailable API. Therefore, the CCF entity determines to request to roll out or activate the API #4.

S1312: The API invoking entity sends a first request to the CCF entity.

The first request indicates the available first API obtained by rolling out or activating the first API. The first request may be an API invoking notification request message.

The first request may include one or more of a name, a type, and a service area of the first API.

S1313: The CCF entity sends a second request to the second API provider entity.

The second request is used to request to roll out or activate the first API, and the second request may be a rollout request or an activation request.

The second request may include one or more of the name, the type, and the service area of the first API.

S1314: The second API provider entity rolls out or activates the first API. The interface information of the first API may be obtained by rolling out or activating the first API.

S1315: The second API provider entity sends a third response to the CCF entity.

Specifically, if the second API provider entity successfully rolls out or activates the first API, the third response may be an acknowledgment response. The third response includes the interface information of the first API, and the interface information includes an IP address, a port number, a URI, and the like of the first API. Optionally, the third response may further include one or more of the name, the type, and the service area of the first API. If the second API provider entity fails to roll out or activate the first API, the third response may be a negative acknowledgment response.

The third response may be a rollout response or an activation response.

S1316: The CCF entity sends a second response to the API invoking entity.

The second response may include the interface information of the first API. Optionally, the second response may further include one or more of the name, the type, and the service area of the first API. The second response may be an API discovery response.

S1317: After receiving the second response, the API invoking entity obtains the interface information of the first API, and invokes the first API via the interface information of the first API to provide a service.

S1318: The second API provider entity publishes, to the CCF entity, API information provided by the second API provider entity, to support a subsequent API invoking entity in discovering and invoking an API that has been rolled out or activated.

In this embodiment of this application, after receiving the API that can be rolled out or activated and/or the availability of the API that can be rolled out or activated, the API invoking entity determines whether to request to roll out or activate the first API. The second API provider entity rolls out or activates an API provider entity corresponding to the first API, so that the API invoking entity obtains the interface information of the first API, and invokes the first API via the interface information of the first API to provide a service. A corresponding API is rolled out or activated based on a requirement, thereby avoiding a waste of resources of an API provider entity and improving resource utilization.

The foregoing embodiment is a procedure in which the API invoking entity and the API provider entity are controlled by a single CCF entity to roll out or activate an API. A next embodiment is a procedure in which the API invoking entity and the API provider entity are controlled by a plurality of CCF entities to roll out or activate an API. In addition, the CCF entity determines whether to trigger a request to execute a rollout process or an activation process.

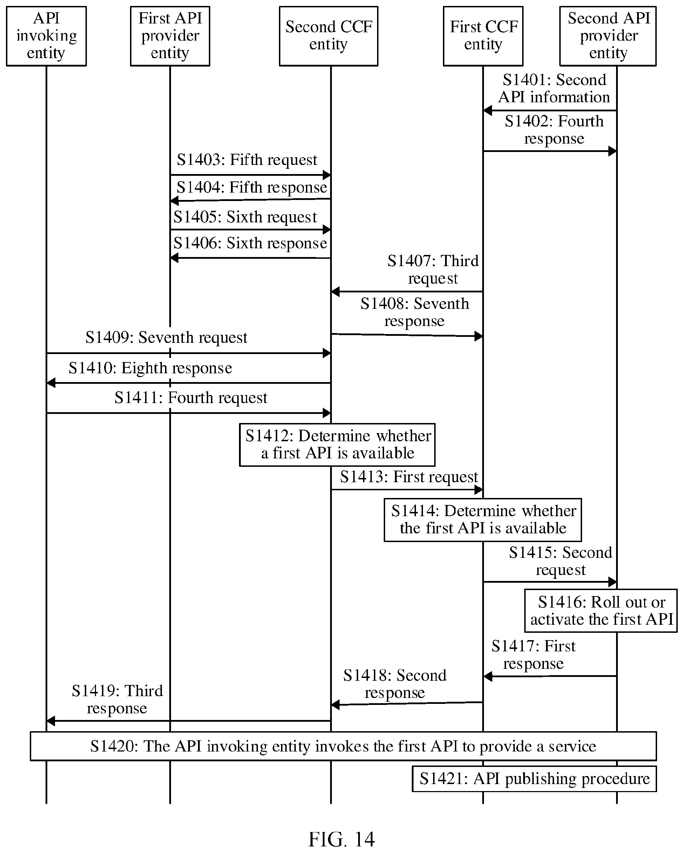

FIG. 14 is a schematic flowchart of still another communication method according to an embodiment of this application. The communication method mainly includes the following steps.

S1401: A second API provider entity sends second API information to a first CCF entity, where the second API information includes an API that can be rolled out or activated within a control range of the first CCF entity and/or availability of the API that can be rolled out or activated within the control range of the first CCF entity.

The second API information may further include information such as a name, a type, and a service area of the API that can be rolled out or activated within the control range of the first CCF entity, but does not include interface information (for example, an IP address, a port number, and a URI) of the API that can be rolled out or activated. Therefore, an API invoking entity cannot invoke the API that can be rolled out or activated.

Optionally, the second API information may further include indication information, and the indication information indicates that the API that can be rolled out or activated is available after the API that can be rolled out or activated within the control range of the first CCF entity is rolled out or activated.

S1402: The first CCF entity returns a fourth response to the second API provider entity.

Specifically, when the first CCF entity receives the second API information, the fourth response may be an acknowledgment response; or when the first CCF entity does not receive the second API information, the fourth response may be a negative acknowledgment response.

S1403 to S1406 are the same as S1203 to S1206. For a specific implementation, refer to S1203 to S1206. Details are not described herein again.

S1407: The first CCF entity sends a third request to a second CCF entity. The third request includes an identifier of the first CCF, and the API that can be rolled out or activated within the control range of the first CCF entity and/or the availability of the API that can be rolled out or activated within the control range of the first CCF entity.

Optionally, the third request may further include indication information, and the indication information indicates that the API that can be rolled out or activated is available after the API that can be rolled out or activated within the control range of the first CCF entity is rolled out or activated.

The third request may be an API publishing request.

S1408: The second CCF entity sends a seventh response to the first CCF entity.

Specifically, after receiving the third request, the second CCF entity checks and authorizes the first CCF entity. If the authorization succeeds, the second CCF entity stores the identifier of the first CCF, and the API that can be rolled out or activated within the control range of the first CCF entity and/or the availability of the API that can be rolled out or activated within the control range of the first CCF entity, and the seventh response returned to the first CCF entity is an acknowledgment response. If the authorization succeeds, the seventh response returned to the first CCF entity is a negative acknowledgment response.

S1409 and S1410 are the same as S1207 and S1208. For a specific implementation, refer to S1207 and S1208. Details are not described herein again.

S1411: The API invoking entity sends a fourth request to the second CCF entity, where the fourth request includes a first API requested by the API invoking entity.

The fourth request may be an API discovery request.

S1412: The second CCF entity queries, from pre-stored third API information, whether the first API is available. The third API information includes availability of APIs within control ranges of a plurality of CCF entities, and the plurality of CCF entities include the first CCF entity and the second CCF entity.

It should be noted that after S1401 and S1402 and S1407 and S1408, the third API information stored by the second CCF entity includes the identifier of the first CCF, and the API that can be rolled out or activated within the control range of the first CCF entity and/or the availability of the API that can be rolled out or activated within the control range of the first CCF entity. The third API information may further include an identifier of the second CCF entity, and an API that can be rolled out or activated within a control range of the second CCF entity and/or availability of the API that can be rolled out or activated within the control range of the second CCF entity. The third API information may alternatively include an identifier of the second CCF entity, and an API that has been rolled out or activated within a control range of the second CCF entity and/or availability of the API that has been rolled out or activated within the control range of the second CCF entity.

For example, as shown in Table 9, Table 9 is a statistical table of the third API information stored by the second CCF entity. The third API information stored by the second CCF entity includes names, interface information, and availability of an API #1 and an API #2 within a control range of a CCF #1, names, interface information, and availability of an API #3 and an API #4 within a control range of a CCF #2, and names, interface information, and availability of the API #4 and an API #5 within a control range of a CCF #3. The API #3 and the API #4 within the control range of the CCF #2 do not have interface information. Therefore, the API #3 and the API #4 within the control range of the CCF #2 are unavailable, and the APIs within the control range of the CCF #2 need to be rolled out or activated. The API #4 and the API #5 within the control range of the CCF #3 do not have interface information. Therefore, the API #4 and the API #5 within the control range of the CCF #3 are unavailable, and the APIs within the control range of the CCF #3 need to be rolled out or activated.

**Table 9**

| | Name of an API | Source of the API | Interface information | Availability of the API |
|---|---|---|---|---|
| Third API information stored by a second CCF entity | API #1 | CCF #1 | Yes | Available |
| | API #2 | CCF #1 | Yes | Available |
| | API #3 | CCF #2 | None | Unavailable (can be rolled out or activated) |
| | API #4 | CCF #2 | None | Unavailable (can be rolled out or activated) |
| | ... | ... | ... | ... |
| | API #4 | CCF #3 | None | Unavailable (can be rolled out or activated) |
| | API #5 | CCF #3 | None | Unavailable (can be rolled out or activated) |

Specifically, if the first API is unavailable, the second CCF entity selects the first CCF entity corresponding to the first API from the plurality of CCF entities. If the first API is available, the second CCF entity returns interface information of the first API to the API invoking entity, so that the API invoking entity invokes the first API via the interface information of the first API to provide a service.

For example, first APIs requested by the API invoking entity are the API #1 and the API #4. It can be learned from Table 9 that the API #1 may be provided by an API provider entity within the control range of the CCF #1 and has interface information, and the API #1 is available. The API #4 may be provided by an API provider entity within the control range of the CCF #2 and an API provider entity within the control range of the CCF #3 and does not have interface information, and the API #4 is unavailable. One CCF entity needs to be selected from the CCF #2 and the CCF #3, to avoid a waste of resources caused by rolling out or activating APIs within the control ranges of the plurality of CCF entities.

S1413: The second CCF entity sends a first request to the first CCF entity.

The first request includes the first API requested by the API invoking entity. The first request may further include an identifier of the first CCF entity. The first request may be an API discovery request.

S1414 to S1417 are the same as S1210 to S1213 in the embodiment shown in FIG. 12. For a specific implementation, refer to S1214 to S1213. Details are not described herein again.

S1418: The first CCF entity sends a second response to the second CCF entity.

The second response may include the interface information of the first API. The second response may further include one or more of a name, a type, and a service area of the first API. The second response may be an API discovery response.

S1419: The second CCF entity sends a third response to the API invoking entity.

The third response may include the interface information of the first API. The second response may further include one or more of the name, the type, and the service area of the first API. The third response may be an API discovery response.

S1420 and S1421 are the same as S1215 and S1216 in the embodiment shown in FIG. 12. For a specific implementation, refer to S1215 and S1216. Details are not described herein again.

In this embodiment of this application, the second CCF entity selects a CCF entity based on the availability of the APIs within the control ranges of the plurality of CCF entities. When an API discovery procedure is executed across CCF entities, the first CCF entity determines, based on availability of a plurality of APIs within the control range of the first CCF entity, whether to request to roll out or activate the first API. The second API provider entity rolls out or activates the first API, so that the API invoking entity obtains the interface information of the first API. A corresponding API is rolled out or activated based on a requirement, thereby avoiding a waste of resources of an API provider entity and improving resource utilization.

In the foregoing embodiment, the CCF entity determines whether to trigger a request to execute the rollout process or the activation process. In a next embodiment, the API invoking entity determines whether to trigger a request to execute the rollout process or the activation process. In addition, the next embodiment is a procedure in which the API invoking entity and the API provider entity are controlled by a plurality of CCF entities to roll out or activate an API.

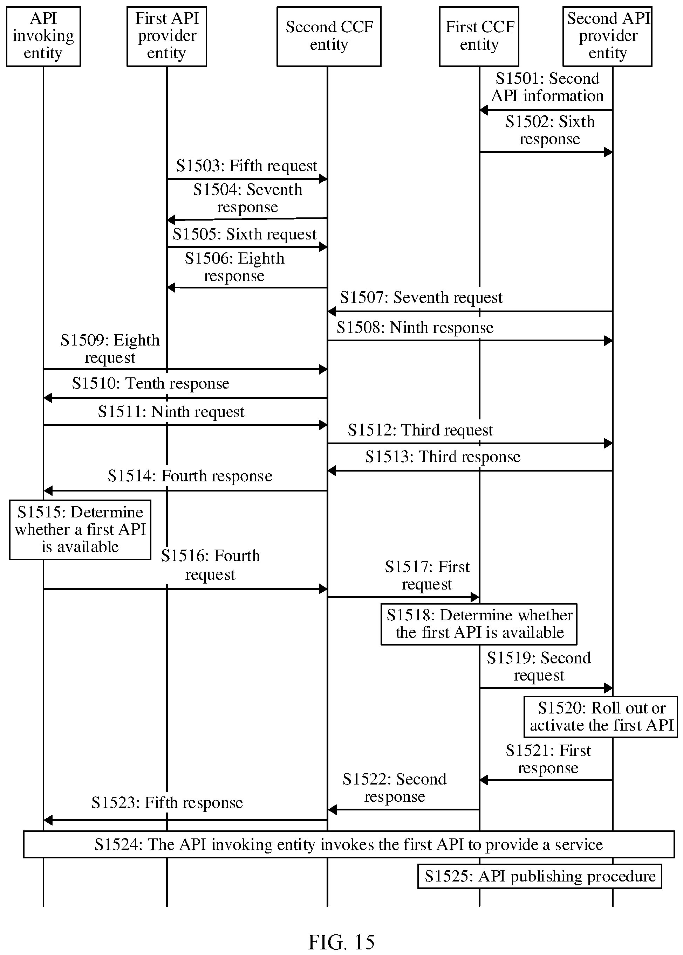

FIG. 15 is a schematic flowchart of still another communication method according to an embodiment of this application. The communication method mainly includes the following steps.

S1501 to S1510 are the same as S1401 to S1410 in the embodiment shown in FIG. 14. For a specific implementation, refer to S1401 to S1410. Details are not described herein again.

S1511: An API invoking entity sends a ninth request to a second CCF entity.

The ninth request is used to request to query a first API requested by the API invoking entity. The ninth request may include the first API requested by the API invoking entity, and the ninth request may be an API discovery request.

S1512: The second CCF entity sends a third request to a first CCF entity.

The third request is used to request to query the first API requested by the API invoking entity. The third request includes the first API requested by the API invoking entity, and the third request may further include an identifier of the first CCF entity. The third request may be an API discovery request.

S1513: The first CCF entity sends a third response to the second CCF entity.

The third response includes an identifier of the first CCF, and an API that can be rolled out or activated within a control range of the first CCF entity and/or availability of the API that can be rolled out or activated within the control range of the first CCF entity. The third response may be an API discovery response.

Optionally, the third response may further include indication information, and the indication information indicates that the API that can be rolled out or activated is available after the API that can be rolled out or activated within the control range of the first CCF entity is rolled out or activated.

S1514: The second CCF entity sends a fourth response to the API invoking entity.

The fourth response includes availability of APIs within control ranges of a plurality of CCF entities, and the plurality of CCF entities include the first CCF entity and the second CCF entity. Further, the fourth response may include APIs that can be rolled out or activated and/or availability of the APIs that can be rolled out or activated within the control ranges of the plurality of CCF entities. The fourth response may further include APIs that have been rolled out or activated and/or availability of the APIs that have been rolled out or activated within the control ranges of the plurality of CCF entities. The fourth response may be an API discovery response.

Optionally, the fourth response may further include indication information, and the indication information indicates that the APIs that can be rolled out or activated are available after the APIs that can be rolled out or activated within the control ranges of the plurality of CCF entities are rolled out or activated.

As shown in Table 10, Table 10 is a statistical table of API information fed back by the second CCF entity to the API invoking entity. For example, first APIs requested by the API invoking entity are an API #1 and an API #4. Therefore, the second CCF entity feeds back API information of the API #1 and API information of the API #4. The API #1 is an API that has been rolled out or activated within a control range of a CCF #1, and the API #4 is an API that can be rolled out or activated within a control range of a CCF #2 and a control range of a CCF #3. The API that has been rolled out or activated within the control range of the CCF #1 has interface information, and the API #1 is available. The API that can be rolled out or activated within the control range of the CCF #2 and the control range of the CCF #3 does not have interface information, and the API#4 is unavailable. The API that can be rolled out or activated within the control range of the CCF #2 and the control range of the CCF #3 needs to be rolled out or activated.

**Table 10**

| | Name of an API | Source of the API | Interface information | Availability of the API |
|---|---|---|---|---|
| API information fed back by a second CCF entity to an API invoking entity | API #1 | CCF #1 | Yes | Available |
| | API #4 | CCF #2 | None | Unavailable (can be rolled out or activated) |
| | API #4 | CCF #3 | None | Unavailable (can be rolled out or activated) |

S1515: The API invoking entity determines, based on the availability of the APIs within the control ranges of the plurality of CCF entities, whether the first API requested by the API invoking entity is available.

Specifically, if the first API is available, the API invoking entity may invoke the first API via interface information of the first API to provide a service. If the first API is unavailable, the API invoking entity selects the first CCF entity corresponding to the first API from the plurality of CCF entities.

For example, the first APIs requested by the API invoking entity are the API #1 and the API #4. It can be learned from Table 10 that the API #1 is an API within the control range of the CCF #1 and has the interface information, and the API #1 is an available API. The API #4 is an API within the control range of the CCF #2 and the control range of the CCF #3 and does not have the interface information, and the API #4 is an unavailable API. Therefore, the CCF entity selects one CCF #2 from the CCF #2 and the CCF #3, and requests to roll out or activate the API within the control range of the CCF #2.

S1516: The API invoking entity sends a fourth request to the second CCF entity.

The fourth request includes the identifier of the first CCF entity and the first API, and the identifier of the first CCF entity and the first API are used to request to roll out or activate the first API within the control range of the first CCF entity. The fourth request may be an API invoking notification request.

Optionally, the fourth request includes one or more of a name, a type, and a service area of the first API.

In this embodiment of this application, the first API within the control range of the first CCF entity is an API of a second API provider entity.

Specifically, after receiving the fourth request, the second CCF entity may determine, based on the identifier of the first CCF entity, that the first API is provided by an API provider entity within the control range of the first CCF entity, and therefore determine to request to roll out or activate the first API within the control range of the first CCF entity.

S1517: The second CCF entity sends a first request to the first CCF entity.

The first request is used to request to roll out or activate the first API within the control range of the first CCF entity. The first request includes the first API requested by the API invoking entity.

Optionally, the first request may include one or more of the name, the type, and the service area of the first API. The first request may be an API invoking notification request.

S1518 to S1525 are the same as S1414 to S1421 in the embodiment shown in FIG. 14. For a specific implementation, refer to S1414 to S142. Details are not described herein again.

In this embodiment of this application, the API invoking entity selects a CCF entity based on the availability of the APIs within the control ranges of the plurality of CCF entities. When an API discovery procedure is executed across CCF entities, the first CCF entity determines, based on availability of a plurality of APIs within the control range of the first CCF entity, whether to request to roll out or activate the first API. The second API provider entity rolls out or activates the API provider entity corresponding to the first API, so that the API invoking entity obtains interface information of the first API. A corresponding API is rolled out or activated based on a requirement, thereby avoiding a waste of resources of an API provider entity and improving resource utilization.

It should be noted that an execution sequence of the steps in the foregoing embodiments is not limited, and the steps may be combined or split.

In embodiments of this application, the API provider entity, the API invoking entity, the CCF entity, and the network management system are divided into function modules based on the foregoing method examples. For example, each function module may be divided to each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division corresponding to each function.

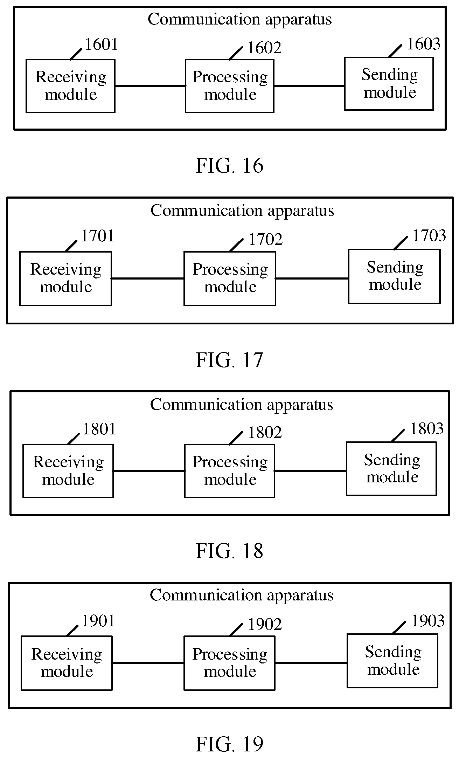

FIG. 16 is a diagram of a communication apparatus according to an embodiment of this application. The communication apparatus may include a receiving module 1601, a processing module 1602, and a sending module 1603. The receiving module 1601 and the sending module 1603 may communicate with the outside. The receiving module 1601 and the sending module 1603 may also be referred to as a communication interface, a transceiver unit, or a transceiver module. The processing module 1602 may perform a processing-related action. The receiving module 1601, the processing module 1602, and the sending module 1603 may be configured to perform the actions performed by the CCF entity in the foregoing method embodiments.

In a possible design, the firmware upgrading apparatus may implement the steps or the procedures performed by the CCF entity in the foregoing method embodiments, for example, may be the CCF entity, or a chip or a circuit configured in the CCF entity.

It should be noted that, for implementation of each module, refer to the corresponding descriptions of the method embodiments shown in FIG. 8 to FIG. 15. The module performs the methods and the functions performed by the CCF entity in the foregoing embodiments.

FIG. 17 is a diagram of another communication apparatus according to an embodiment of this application. The communication apparatus may include a receiving module 1701, a processing module 1702, and a sending module 1703. The receiving module 1701 and the sending module 1703 may communicate with the outside. The receiving module 1701 and the sending module 1703 may also be referred to as a communication interface, a transceiver unit, or a transceiver module. The processing module 1702 may perform a processing-related action. The receiving module 1701, the processing module 1702, and the sending module 1703 may be configured to perform the actions performed by the network management system in the foregoing method embodiments.

In a possible design, the communication apparatus may implement the steps or the procedures performed by the network management system in the foregoing method embodiments, for example, may be the network management system, or a chip or a circuit configured in the network management system.

It should be noted that, for implementation of each module, refer to the corresponding descriptions of the method embodiments shown in FIG. 8 to FIG. 15. The module performs the methods and the functions performed by the network management system in the foregoing embodiments.

FIG. 18 is a diagram of still another communication apparatus according to an embodiment of this application. The communication apparatus may include a receiving module 1801, a processing module 1802, and a sending module 1803. The receiving module 1801 and the sending module 1803 may communicate with the outside. The receiving module 1801 and the sending module 1803 may also be referred to as a communication interface, a transceiver unit, or a transceiver module. The processing module 1802 may perform a processing-related action. The receiving module 1801, the processing module 1802, and the sending module 1803 may be configured to perform the actions performed by the API invoking entity in the foregoing method embodiments.

In a possible design, the communication apparatus may implement the steps or the procedures performed by the API invoking entity in the foregoing method embodiments, for example, may be the API invoking entity, or a chip or a circuit configured in the API invoking entity.

It should be noted that, for implementation of each module, refer to the corresponding descriptions of the method embodiments shown in FIG. 8 to FIG. 15. The module performs the methods and the functions performed by the API invoking entity in the foregoing embodiments.

FIG. 19 is a diagram of still another communication apparatus according to an embodiment of this application. The communication apparatus may include a receiving module 1901, a processing module 1902, and a sending module 1903. The receiving module 1901 and the sending module 1903 may communicate with the outside. The receiving module 1901 and the sending module 1903 may also be referred to as a communication interface, a transceiver unit, or a transceiver module. The processing module 1902 may perform a processing-related action. The receiving module 1901, the processing module 1902, and the sending module 1903 may be configured to perform the actions performed by the API provider entity in the foregoing method embodiments.

In a possible design, the communication apparatus may implement the steps or the procedures performed by the API provider entity in the foregoing method embodiments, for example, may be the API provider entity, or a chip or a circuit configured in the API provider entity.

It should be noted that, for implementation of each module, refer to the corresponding descriptions of the method embodiments shown in FIG. 8 to FIG. 15. The module performs the methods and the functions performed by the API provider entity in the foregoing embodiments.

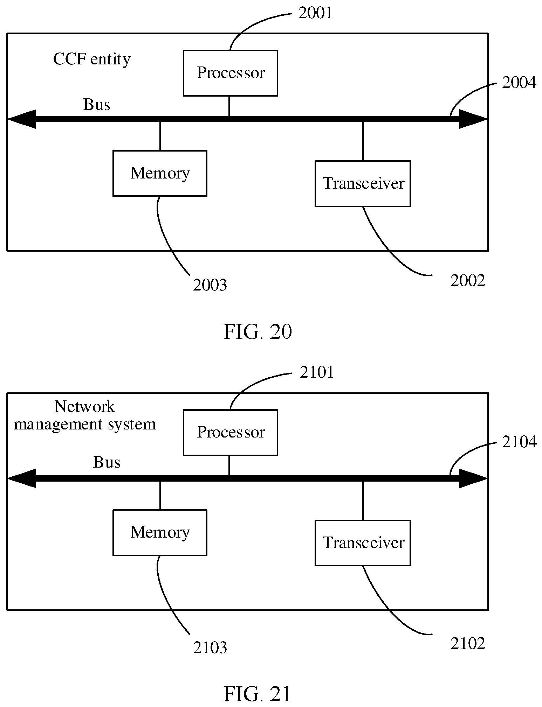

FIG. 20 is a diagram of a structure of a CCF entity according to an embodiment of this application. The CCF entity may be used in the system shown in FIG. 1 to FIG. 3, to perform the functions of the CCF entity in the foregoing method embodiments, or implement the steps or the procedures performed by the CCF entity in the foregoing method embodiments.

As shown in FIG. 20, the CCF entity includes a processor 2001 and a transceiver 2002. Optionally, the CCF entity further includes a memory 2003. The processor 2001, the transceiver 2002, and the memory 2003 may communicate with each other through an internal connection path, to transfer a control signal and/or a data signal. The memory 2003 is configured to store a computer program. The processor 2001 is configured to invoke the computer program from the memory 2003 and run the computer program, to control the transceiver 2002 to send and receive a signal. Optionally, the CCF entity may further include an antenna, configured to send, via a radio signal, uplink data or uplink control signaling output by the transceiver 2002.

The processor 2001 may correspond to the receiving module and the sending module in FIG. 16. The processor 2001 and the memory 2003 may be combined into one processing apparatus. The processor 2001 is configured to execute program code stored in the memory 2003 to implement the foregoing functions. During specific implementation, the memory 2003 may alternatively be integrated into the processor 2001, or may be independent of the processor 2001.

The transceiver 2002 may correspond to the receiving module and the sending module in FIG. 16, and may also be referred to as a transceiver unit or a transceiver module. The transceiver 2002 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the CCF entity shown in FIG. 20 can implement the processes related to the CCF entity in the method embodiments shown in FIG. 8 to FIG. 15. Operations and/or functions of the modules in the CCF entity are respectively for implementing the corresponding procedures in the foregoing method embodiments. For details, refer to the descriptions in the foregoing method embodiments. To avoid repetition, detailed descriptions are properly omitted herein.

The processor 2001 may be configured to perform the actions that are described in the foregoing method embodiments and that are implemented inside the CCF entity, and the transceiver 2002 may be configured to perform the sending or receiving actions of the CCF entity that are described in the foregoing method embodiments. For details, refer to the descriptions in the foregoing method embodiments. Details are not described herein again.

The processor 2001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 2001 may be a combination of processors implementing a computing function, for example, a combination of one or more microprocessors, or a combination of the digital signal processor and a microprocessor. A communication bus 2004 may be a peripheral component interconnect PCI bus, an extended industry standard architecture EISA bus, or the like. The bus may be classified into an address bus, a data bus, a control bus, and the like. For ease of representation, only one bold line represents the bus in FIG. 20, but this does not mean that there is only one bus or only one type of bus. The communication bus 2004 is configured to implement connection and communication between the components. The transceiver 2002 in this embodiment of this application is configured to perform signaling or data communication with another node device. The memory 2003 may include a volatile memory, for example, a nonvolatile dynamic random access memory (nonvolatile random access memory, NVRAM), a phase change random access memory (phase change RAM, PRAM), or a magnetoresistive random access memory (magnetoresistive RAM, MRAM). The memory 2003 may further include a non-volatile memory, for example, at least one magnetic disk storage device, an electrically erasable programmable read-only memory (electrically erasable programmable read-only memory, EEPROM), a flash storage device such as a NOR flash memory (NOR flash memory) or a NAND flash memory (NAND flash memory), or a semiconductor device such as a solid-state drive (solid-state disk, SSD). Optionally, the memory 2003 may be at least one storage apparatus located far away from the processor 2001. Optionally, the memory 2003 may further store a group of computer program code or configuration information. Optionally, the processor 2001 may further execute the program stored in the memory 2003. The processor may cooperate with the memory and the transceiver to perform any method and function of the CCF entity in the foregoing embodiments of this application.

FIG. 21 is a diagram of a structure of a network management system according to an embodiment of this application. The network management system may be used in the system shown in FIG. 1 to FIG. 3, to perform the functions of the network management system in the foregoing method embodiments, or implement the steps or the procedures performed by the network management system in the foregoing method embodiments.

As shown in FIG. 21, the network management system includes a processor 2101 and a transceiver 2102. Optionally, the network management system further includes a memory 2103. The processor 2101, the transceiver 2102, and the memory 2103 may communicate with each other through an internal connection path, to transfer a control signal and/or a data signal. The memory 2103 is configured to store a computer program. The processor 2101 is configured to invoke the computer program from the memory 2103 and run the computer program, to control the transceiver 2102 to send and receive a signal. Optionally, the network management system may further include an antenna, configured to send, via a radio signal, uplink data or uplink control signaling output by the transceiver 2102.

The processor 2101 may correspond to the processing module in FIG. 17. The processor 2101 and the memory 2103 may be combined into one processing apparatus. The processor 2101 is configured to execute program code stored in the memory 2103 to implement the foregoing functions. During specific implementation, the memory 2103 may alternatively be integrated into the processor 2101, or may be independent of the processor 2101.

The transceiver 2102 may correspond to the sending module and the receiving module in FIG. 17, and may also be referred to as a transceiver unit or a transceiver module. The transceiver 2102 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the network management system shown in FIG. 21 can implement processes related to the network management system in the method embodiments shown in FIG. 8 to FIG. 16. Operations and/or functions of modules in the network management system are respectively for implementing the corresponding procedures in the foregoing method embodiments. For details, refer to the descriptions in the foregoing method embodiments. To avoid repetition, detailed descriptions are properly omitted herein.

The processor 2101 may be configured to perform the actions that are described in the foregoing method embodiments and that are implemented inside the network management system, and the transceiver 2102 may be configured to perform the sending or receiving actions of the network management system that are described in the foregoing method embodiments. For details, refer to the descriptions in the foregoing method embodiments. Details are not described herein again.

The processor 2101 may be processors of various types that are mentioned above. A communication bus 2104 may be a peripheral component interconnect PCI bus, an extended industry standard architecture EISA bus, or the like. The bus may be classified into an address bus, a data bus, a control bus, and the like. For ease of representation, only one bold line represents the bus in FIG. 21, but this does not mean that there is only one bus or only one type of bus. The communication bus 2104 is configured to implement connection and communication between the components. The transceiver 2102 in the device in this embodiment of this application is configured to perform signaling or data communication with another device. The memory 2103 may be memories of various types that are mentioned above. Optionally, the memory 2103 may be at least one storage apparatus located far away from the processor 2101. The memory 2103 stores a group of computer program code or configuration information, and the processor 2101 executes the program in the memory 2103. The processor may cooperate with the memory and the transceiver to perform any method and function of the network management system in the foregoing embodiments of this application.

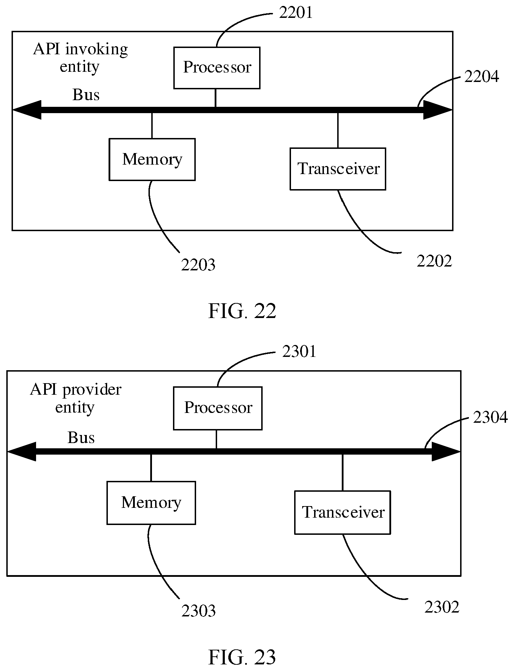

FIG. 22 is a diagram of a structure of an API invoking entity according to an embodiment of this application. The API invoking entity may be used in the system shown in FIG. 1 to FIG. 3, to perform the functions of the API invoking entity in the foregoing method embodiments, or implement the steps or the procedures performed by the API invoking entity in the foregoing method embodiments.

As shown in FIG. 22, the API invoking entity includes a processor 2201 and a transceiver 2202. Optionally, the API invoking entity further includes a memory 2203. The processor 2201, the transceiver 2202, and the memory 2203 may communicate with each other through an internal connection path, to transfer a control signal and/or a data signal. The memory 2203 is configured to store a computer program. The processor 2201 is configured to invoke the computer program from the memory 2203 and run the computer program, to control the transceiver 2202 to send and receive a signal. Optionally, the API invoking entity may further include an antenna, configured to send, via a radio signal, uplink data or uplink control signaling output by the transceiver 2202.

The processor 2201 may correspond to the processing module in FIG. 18. The processor 2201 and the memory 2203 may be combined into one processing apparatus. The processor 2201 is configured to execute program code stored in the memory 2203 to implement the foregoing functions. During specific implementation, the memory 2203 may alternatively be integrated into the processor 2201, or may be independent of the processor 2201.

The transceiver 2202 may correspond to the sending module and the receiving module in FIG. 18, and may also be referred to as a transceiver unit or a transceiver module. The transceiver 2202 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the API invoking entity shown in FIG. 22 can implement the processes related to the API invoking entity in the method embodiments shown in FIG. 8 to FIG. 16. Operations and/or functions of modules in the API invoking entity are respectively for implementing the corresponding procedures in the foregoing method embodiments. For details, refer to the descriptions in the foregoing method embodiments. To avoid repetition, detailed descriptions are properly omitted herein.

The processor 2201 may be configured to perform the actions that are described in the foregoing method embodiments and that are implemented inside the API invoking entity, and the transceiver 2202 may be configured to perform the sending or receiving actions of the API invoking entity that are described in the foregoing method embodiments. For details, refer to the descriptions in the foregoing method embodiments. Details are not described herein again.

The processor 2201 may be processors of various types that are mentioned above. A communication bus 2204 may be a peripheral component interconnect PCI bus, an extended industry standard architecture EISA bus, or the like. The bus may be classified into an address bus, a data bus, a control bus, and the like. For ease of representation, only one bold line represents the bus in FIG. 22, but this does not mean that there is only one bus or only one type of bus. The communication bus 2204 is configured to implement connection and communication between the components. The transceiver 2202 in the device in this embodiment of this application is configured to perform signaling or data communication with another device. The memory 2203 may be memories of various types that are mentioned above. Optionally, the memory 2203 may be at least one storage apparatus located far away from the processor 2201. The memory 2203 stores a group of computer program code or configuration information, and the processor 2201 executes the program in the memory 2203. The processor may cooperate with the memory and the transceiver to perform any method and function of the API invoking entity in the foregoing embodiments of this application.

FIG. 23 is a diagram of a structure of an API provider entity according to an embodiment of this application. The API provider entity may be used in the system shown in FIG. 1 to FIG. 3, to perform the functions of the API provider entity in the foregoing method embodiments, or implement the steps or the procedures performed by the API provider entity in the foregoing method embodiments.

As shown in FIG. 23, the API provider entity includes a processor 2301 and a transceiver 2302. Optionally, the API provider entity further includes a memory 2303. The processor 2301, the transceiver 2302, and the memory 2303 may communicate with each other through an internal connection path, to transfer a control signal and/or a data signal. The memory 2303 is configured to store a computer program. The processor 2301 is configured to invoke the computer program from the memory 2303 and run the computer program, to control the transceiver 2302 to send and receive a signal. Optionally, the API provider entity may further include an antenna, configured to send, via a radio signal, uplink data or uplink control signaling output by the transceiver 2302.

The processor 2301 may correspond to the processing module in FIG. 19. The processor 2301 and the memory 2303 may be combined into one processing apparatus. The processor 2301 is configured to execute program code stored in the memory 2303 to implement the foregoing functions. During specific implementation, the memory 2303 may alternatively be integrated into the processor 2301, or may be independent of the processor 2301.

The transceiver 2302 may correspond to the sending module and the receiving module in FIG. 19, and may also be referred to as a transceiver unit or a transceiver module. The transceiver 2302 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the API provider entity shown in FIG. 23 can implement the processes related to the API provider entity in the method embodiments shown in FIG. 8 to FIG. 16. Operations and/or functions of the modules in the API provider entity are respectively for implementing the corresponding procedures in the foregoing method embodiments. For details, refer to the descriptions in the foregoing method embodiments. To avoid repetition, detailed descriptions are properly omitted herein.

The processor 2301 may be configured to perform the actions that are described in the foregoing method embodiments and that are implemented inside the API provider entity, and the transceiver 2302 may be configured to perform the sending or receiving actions of the API provider entity that are described in the foregoing method embodiments. For details, refer to the descriptions in the foregoing method embodiments. Details are not described herein again.

The processor 2301 may be processors of various types that are mentioned above. A communication bus 2304 may be a peripheral component interconnect PCI bus, an extended industry standard architecture EISA bus, or the like. The bus may be classified into an address bus, a data bus, a control bus, and the like. For ease of representation, only one bold line represents the bus in FIG. 23, but this does not mean that there is only one bus or only one type of bus. The communication bus 2304 is configured to implement connection and communication between the components. The transceiver 2302 in the device in this embodiment of this application is configured to perform signaling or data communication with another device. The memory 2303 may be memories of various types that are mentioned above. Optionally, the memory 2303 may be at least one storage apparatus located far away from the processor 2301. The memory 2303 stores a group of computer program code or configuration information, and the processor 2301 executes the program in the memory 2303. The processor may cooperate with the memory and the transceiver to perform any method and function of the API provider entity in the foregoing embodiments of this application.

An embodiment of this application further provides a chip system. The chip system includes a processor, configured to support a CCF entity, a management network management, an API invoking entity, and an API provider entity in implementing the functions in any one of the foregoing embodiments, for example, generating or processing the instantiation process or the rollout process or the activation process in the foregoing methods. In a possible design, the chip system may further include a memory. The memory is configured to be program instructions and data that are necessary for the CCF entity, the management network management, the API invoking entity, and the API provider entity. The chip system may include a chip, or may include a chip and another discrete component. Input and output of the chip system respectively correspond to receiving and sending operations of the CCF entity, the management network management, the API invoking entity, and the API provider entity in the method embodiments.

According to the methods provided in embodiments of this application, this application further provides a computer program product. The computer program product includes a computer program, and when the computer program is run on a computer, the computer is enabled to perform the method according to any one of embodiments shown in FIG. 8 to FIG. 15.

According to the methods provided in embodiments of this application, this application further provides a computer-readable medium. The computer-readable medium stores a computer program, and when the computer program is run on a computer, the computer is enabled to perform the method according to any one of embodiments shown in FIG. 8 to FIG. 15.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a first entity, a first request sent by a second entity, wherein the first request comprises a first application programming interface API requested by the second entity;
querying, by the first entity from pre-stored first API information, whether the first API is available, wherein the first API information comprises availability of a plurality of APIs, and the plurality of APIs comprise the first API; and
if the first API is unavailable, determining, by the first entity, to request to instantiate an API provider entity corresponding to the first API.

2. The method according to claim 1, wherein the method further comprises:
sending, by the first entity, a second request to a network management system, wherein the second request is used to request to instantiate the API provider entity corresponding to the first API; and
receiving, by the first entity, a first response sent by the network management system, wherein the first response comprises interface information of the first API.

3. The method according to claim 2, wherein the method further comprises:
sending, by the first entity, a second response to the second entity, wherein the second response comprises the interface information of the first API.

4. The method according to claim 2 or 3, wherein the method further comprises:
when the API provider entity corresponding to the first API comprises a plurality of API provider entities, selecting, by the first entity, a target API provider entity from the plurality of API provider entities, wherein
the second request comprises an identifier of the target API provider entity, and the second request is used to request to instantiate the target API provider entity.

5. The method according to any one of claims 1 to 4, wherein before the receiving, by a first entity, a first request sent by a second entity, the method further comprises:
receiving, by the first entity, second API information sent by the network management system, wherein the second API information comprises an API of an instantiable API provider entity and/or availability of the API of the instantiable API provider entity.

6. The method according to any one of claims 1 to 5, wherein the first entity is a common application programming interface framework core function CCF entity, and the second entity is an application programming interface API invoking entity.

7. A communication method, wherein the method comprises:
receiving, by a network management system, a second request sent by a first entity, wherein the second request is used to request to instantiate an application programming interface API provider entity corresponding to a first API, and the first API is an API requested by a second entity;
instantiating, by the network management system, the API provider entity corresponding to the first API; and
sending, by the network management system, a first response to the first entity, wherein the first response comprises interface information of the first API.

8. The method according to claim 7, wherein the method further comprises:
sending, by the network management system, second API information to the first entity, wherein the second API information comprises an API of an instantiable API provider entity and/or availability of the API of the instantiable API provider entity.

9. The method according to claim 7 or 8, wherein the instantiating, by the network management system, the API provider entity corresponding to the first API comprises:
when the API provider entity corresponding to the first API comprises a plurality of API provider entities, selecting, by the network management system, a target API provider entity from the plurality of API provider entities; and
instantiating, by the network management system, the target API provider entity.

10. The method according to any one of claims 7 to 9, wherein the first entity is a common application programming interface framework core function CCF entity, and the second entity is an application programming interface API invoking entity.

11. A communication method, wherein the method comprises:
sending, by a second entity, a first request to a first entity, wherein the first request comprises a first application programming interface API requested by the second entity; and
receiving, by the second entity, a second response sent by the first entity, wherein the second response comprises interface information of the first API obtained by instantiating an API provider entity corresponding to the first API.

12. The method according to claim 11, wherein the first entity is a common application programming interface framework core function CCF entity, and the second entity is an application programming interface API invoking entity.

13. A communication method, wherein the method comprises:
receiving, by a first entity, a first request sent by a second entity, wherein the first request comprises a first application programming interface API requested by a third entity;
querying, by the first entity from pre-stored first API information, whether the first API is available, wherein the first API information comprises availability of a plurality of APIs within a control range of the first entity, and the plurality of APIs comprise the first API; and
if the first API is unavailable, determining, by the first entity, to request to instantiate an API provider entity corresponding to the first API.

14. The method according to claim 13, wherein the method further comprises:
sending, by the first entity, a second request to a network management system, wherein the second request is used to request to instantiate the API provider entity corresponding to the first API; and
receiving, by the first entity, a first response sent by the network management system, wherein the first response comprises interface information of the first API.

15. The method according to claim 14, wherein the method further comprises:
sending, by the first entity, a second response to the second entity, wherein the second response comprises the interface information of the first API.

16. The method according to claim 14 or 15, wherein the method further comprises:
when the API provider entity corresponding to the first API comprises a plurality of API provider entities, selecting, by the first entity, a target API provider entity from the plurality of API provider entities, wherein
the second request comprises an identifier of the target API provider entity, and the second request is used to request to instantiate the target API provider entity.

17. The method according to any one of claims 13 to 16, wherein before the receiving, by a first entity, a first request sent by a second entity, the method further comprises:
receiving, by the first entity, second API information sent by the network management system, wherein the second API information comprises an API of an instantiable API provider entity within the control range of the first entity and/or availability of the API of the instantiable API provider entity within the control range of the first entity.

18. The method according to any one of claims 13 to 17, wherein before the receiving, by a first entity, a first request sent by a second entity, the method further comprises:
sending, by the first entity, a third request to the second entity, wherein the third request comprises an identifier of the first CCF, and the API of the instantiable API provider entity within the control range of the first entity and/or the availability of the API of the instantiable API provider entity within the control range of the first entity.

19. The method according to any one of claims 13 to 18, wherein the first entity is a first common application programming interface framework core function CCF entity, the second entity is a second CCF entity, and the third entity is an application programming interface API invoking entity.

20. A communication method, wherein the method comprises:
receiving, by a second entity, a fourth request sent by a third entity, wherein the fourth request comprises a first application programming interface API requested by the third entity;
querying, by the second entity from pre-stored third API information, whether the first API is available, wherein the third API information comprises availability of APIs of API provider entities within control ranges of a plurality of entities, and the plurality of entities comprise the first entity and the second entity; and
if the first API is unavailable, selecting, by the second entity, the first entity corresponding to the first API from the plurality of entities.

21. The method according to claim 20, wherein after the selecting, by the second entity, the first entity corresponding to the first API from the plurality of entities, the method further comprises:
sending, by the second entity, a first request to the first entity, wherein the first request comprises the first API requested by the third entity; and
receiving, by the second entity, a second response sent by the first entity, wherein the second response comprises interface information of the first API.

22. The method according to claim 20 or 21, wherein before the receiving, by a second entity, a fourth request sent by a third entity, the method further comprises:
receiving, by the second entity, a third request sent by the first entity, wherein the third request comprises an identifier of the first CCF, and an API of an instantiable API provider entity within a control range of the first entity and/or availability of the API of the instantiable API provider entity within the control range of the first entity.

23. The method according to any one of claims 20 to 22, wherein the method further comprises:
sending, by the second entity, a third response to the third entity, wherein the third response comprises the interface information of the first API.

24. The method according to any one of claims 20 to 23, wherein before the receiving, by a second entity, a fourth request sent by a third entity, the method further comprises:
receiving, by the second entity, fourth API information sent by a network management system, wherein the fourth API information comprises an API of an instantiable API provider entity within a control range of the second entity and/or availability of the API of the instantiable API provider entity within the control range of the second entity.

25. The method according to any one of claims 20 to 24, wherein the first entity is a first common application programming interface framework core function CCF entity, the second entity is a second CCF entity, and the third entity is an application programming interface API invoking entity.

26. A communication method, wherein the method comprises:
receiving, by a network management system, a second request sent by a first entity, wherein the second request is used to request to instantiate an application programming interface API provider entity corresponding to a first API, and the first API is an API requested by a third entity;
instantiating, by the network management system, the API provider entity corresponding to the first API; and
sending, by the network management system, a first response to the first entity, wherein the first response comprises interface information of the first API.

27. The method according to claim 26, wherein the method further comprises:
sending, by the network management system, second API information to the first entity, wherein the second API information comprises an API of an instantiable API provider entity within a control range of the first entity and/or availability of the API of the instantiable API provider entity within the control range of the first entity.

28. The method according to claim 26, wherein the method further comprises:
sending, by the network management system, fourth API information to the second entity, wherein the fourth API information comprises an API of an instantiable API provider entity within a control range of the second entity and/or availability of the API of the instantiable API provider entity within the control range of the second entity.

29. The method according to any one of claims 26 to 28, wherein the instantiating, by the network management system, the API provider entity corresponding to the first API comprises:
when the API provider entity corresponding to the first API comprises a plurality of API provider entities, selecting, by the network management system, a target API provider entity from the plurality of API provider entities; and
instantiating, by the network management system, the target API provider entity.

30. The method according to any one of claims 20 to 24, wherein the first entity is a first common application programming interface framework core function CCF entity, and the third entity is an application programming interface API invoking entity.

31. A communication method, wherein the method comprises:
sending, by a third entity, a fourth request to a second entity, wherein the fourth request comprises a first application programming interface API requested by the third entity; and
receiving, by the third entity, a third response sent by the second entity, wherein the third response comprises interface information of the first API obtained by instantiating an API provider entity corresponding to the first API, and the interface information of the first API is used by the third entity to invoke the first API to provide a service.

32. The method according to claim 31, wherein the second entity is a second common application programming interface framework core function CCF entity, and the third entity is an application programming interface API invoking entity.

33. A communication method, wherein the method comprises:
sending, by a second entity, a first request to a first entity, wherein the first request comprises a first application programming interface API requested by the second entity;
receiving, by the first entity, the first request sent by the second entity;
querying, by the first entity from pre-stored first API information, whether the first API is available, wherein the first API information comprises availability of a plurality of APIs, and the plurality of APIs comprise the first API; and
if the first API is unavailable, determining, by the first entity, to request to instantiate an API provider entity corresponding to the first API.

34. A communication method, wherein the method comprises:
receiving, by a first entity, a first request sent by a second entity, wherein the first request comprises a first application programming interface API requested by the second entity;
querying, by the first entity from pre-stored first API information, whether the first API is available, wherein the first API information comprises availability of a plurality of APIs, and the plurality of APIs comprise the first API;
if the first API is unavailable, sending, by the first entity, a second request to a network management system, wherein the second request is used to request to instantiate an API provider entity corresponding to the first API, and the first API is an API requested by the second entity;
instantiating, by the network management system, the API provider entity corresponding to the first API; and
sending, by the network management system, a first response to the first entity, wherein the first response comprises interface information of the first API.

35. A communication method, wherein the method comprises:
sending, by a second entity, a first request to a first entity, wherein the first request comprises a first application programming interface API requested by a third entity;
receiving, by the first entity, the first request;
querying, by the first entity from pre-stored first API information, whether the first API is available, wherein the first API information comprises availability of a plurality of APIs within a control range of the first entity, and the plurality of APIs comprise the first API; and
if the first API is unavailable, determining, by the first entity, to request to instantiate an API provider entity corresponding to the first API.

36. A communication method, wherein the method comprises:
receiving, by a first entity, a first request sent by a second entity, wherein the first request comprises a first application programming interface API requested by a third entity;
querying, by the first entity from pre-stored first application programming interface API information, whether the first API is available, wherein the first API information comprises availability of a plurality of APIs within a control range of the first entity, and the plurality of APIs comprise the first API;
if the first API is unavailable, sending, by the first entity, a second request to a network management system, wherein the second request is used to request to instantiate an API provider entity corresponding to the first API, and the first API is an API requested by the third entity;
instantiating, by the network management system, the API provider entity corresponding to the first API; and
sending, by the network management system, a first response to the first entity, wherein the first response comprises interface information of the first API.

37. A communication method, wherein the method comprises:
receiving, by a second entity, a fourth request sent by a third entity, wherein the fourth request comprises a first application programming interface API requested by the third entity;
querying, by the second entity from pre-stored third API information, whether the first API is available, wherein the third API information comprises availability of APIs of API provider entities within control ranges of a plurality of entities, and the plurality of entities comprise the first entity and the second entity;
if the first API is unavailable, selecting, by the second entity, the first entity corresponding to the first API from the plurality of entities;
receiving, by the first entity, a first request sent by the second entity, wherein the first request comprises the first API requested by the third entity;
querying, by the first entity from pre-stored first application programming interface API information, whether the first API is available, wherein the first API information comprises availability of a plurality of APIs within a control range of the first entity, and the plurality of APIs comprise the first API; and
if the first API is unavailable, determining, by the first entity, to request to instantiate an API provider entity corresponding to the first API.

38. A communication method, wherein the method comprises:
sending, by a third entity, a fourth request to a second entity, wherein the fourth request comprises a first application programming interface API requested by the third entity;
receiving, by the second entity, the fourth request sent by the third entity, wherein the fourth request comprises the first API requested by the third entity;
querying, by the second entity from pre-stored third API information, whether the first API is available, wherein the third API information comprises availability of APIs of API provider entities within control ranges of a plurality of entities, and the plurality of entities comprise the first entity and the second entity;
if the first API is unavailable, selecting, by the second entity, the first entity corresponding to the first API from the plurality of entities; and
receiving, by the third entity, a third response sent by the second entity, wherein the third response comprises interface information of the first API obtained by instantiating an API provider entity corresponding to the first API, and the interface information of the first API is used by the third entity to invoke the first API to provide a service.

39. A communication apparatus, comprising a processor and a memory, wherein the memory is configured to store a computer program, and the processor runs the computer program, to enable the apparatus to perform the method according to any one of claims 1 to 6, any one of claims 7 to 10, either of claims 11 and 12, any one of claims 13 to 19, any one of claims 20 to 25, any one of claims 26 to 30, or either of claims 31 and 32.

40. A computer-readable storage medium, configured to store a computer program, wherein when the computer program is run on a computer, the computer is enabled to perform the method according to any one of claims 1 to 32.

41. A communication system, wherein the communication system comprises a first entity and a second entity, the communication system comprises the first entity and a network management system, or the communication system comprises the first entity, the second entity, and the network management system, wherein the first entity is configured to perform the method according to any one of claims 1 to 6, the network management system is configured to perform the method according to any one of claims 7 to 10, and the second entity is configured to perform the method according to claim 11 or 12.

42. The communication system according to claim 41, wherein the communication system further comprises an API provider entity; and
the first entity is an edge enabler server EES, the second entity is a first edge application server EAS, the API provider entity is an EAS other than the first EAS, and the network management system is an EAS instantiation management system.

43. A communication system, wherein the communication system comprises a first entity and a network management system, the communication system comprises the first entity and a second entity, the communication system comprises the second entity and a third entity, the communication system comprises the first entity, the second entity, and the network management system, the communication system comprises the first entity, the second entity, and the third entity, or the communication system comprises the first entity, the second entity, the third entity, and the network management system, wherein the first entity is configured to perform the method according to any one of claims 13 to 19, the second entity is configured to perform the method according to any one of claims 20 to 25, the network management system is configured to perform the method according to any one of claims 26 to 30, and the third entity is configured to perform the method according to claim 31 or 32.

44. The communication system according to claim 43, wherein the communication system further comprises an API provider entity; and
the first entity or the second entity is an edge enabler server EES, the third entity is a first edge application server EAS, the API provider entity is an EAS other than the first EAS, and the network management system is an EAS instantiation management system.
